(19) **Europäisches Patentamt / European Patent Office / Office européen des brevets**

(11) **EP 4 205 909 B1**

(12) **FASCICULE DE BREVET EUROPEEN**

(45) Date de publication et mention de la délivrance du brevet:
**17.09.2025 Bulletin 2025/38**

(21) Numéro de dépôt: **22214448.7**

(22) Date de dépôt: **19.12.2022**

(51) Classification Internationale des Brevets (IPC):
**B25B 23/147** (2006.01)

(52) Classification Coopérative des Brevets (CPC):
**B25B 23/1475**

(54) **PROCÉDÉ DE RÉALISATION D'UNE OPÉRATION DE VISSAGE/DÉVISSAGE COMPRENANT UNE ÉTAPE DE DÉTERMINATION DE LA VITESSE MAXIMALE DE REBOND DU ROTOR, ET DISPOSITIF DE MISE EN OEUVRE D'UN TEL PROCÉDÉ**

VERFAHREN ZUR DURCHFÜHRUNG EINES SCHRAUB-/ABSCHRAUBVORGANGS MIT SCHRITT ZUR BESTIMMUNG DER MAXIMALEN ROTORRÜCKPRALLGESCHWINDIGKEIT, UND VORRICHTUNG ZUR DURCHFÜHRUNG EINES SOLCHEN VERFAHRENS

METHOD FOR PERFORMING A SCREW/UNSCREWING OPERATION INCLUDING A STEP FOR DETERMINING THE MAXIMUM REBOUND SPEED OF THE ROTOR, AND DEVICE FOR CARRYING-OUT SUCH A METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.12.2021 FR 2114702**

(43) Date de publication de la demande:
**05.07.2023 Bulletin 2023/27**

(73) Titulaire: **ETABLISSEMENTS GEORGES RENAULT**
**44800 Saint Herblain (FR)**

(72) Inventeur: **MAHOT, Pierre**
**44620 LA MONTAGNE (FR)**

(74) Mandataire: **Vidon Brevets & Stratégie**
**16B, rue de Jouanet**
**BP 90333**
**35703 Rennes Cedex 7 (FR)**

(56) Documents cités:
**EP-B1- 3 653 339      CN-B- 105 345 715**
**CN-U- 205 148 183**

**Description**

**1. Domaine de l'invention**

Le domaine de l'invention est celui de la conception de dispositifs de vissage/dévissage à choc électriques, encore appelés clés à choc, comprenant un mécanisme d'impact rebondissant. L'invention conceme en particulier un dispositif de contrôle du couple appliqué par un dispositif de vissage/dévissage permettant la réalisation d'opérations de vissage/dévissage, selon le préambule de la revendication 14.

L'invention conceme également le pilotage de tels dispositifs de vissage/dévissage, et plus particulièrement le contrôle, i.e. la surveillance) du niveau de serrage des dispositifs de vissage/dévissage à choc ou impact et leur arrêt lorsque niveau de couple souhaité est atteint. L'invention conceme en particulier un procédé de contrôle du couple appliqué lors d'une opération de vissage/dévissage au moyen d'un dispositif de vissage, selon le préambule de la revendication 1.

**2. Art antérieur**

Les clés à choc sont couramment utilisées dans divers secteurs pour œuvrer à la réalisation d'opérations de vissage/dévissage d'assemblages.

On s'intéresse ici tout particulièrement aux clés à choc électriques à mécanisme d'impact rebondissant, dont le mécanisme d'impact est lié rigidement d'une part au rotor du moteur de la clé et d'autre part à l'organe de sortie apte à entrainer en rotation un élément d'entrainement d'un élément à visser.

Les clés à choc à mécanisme d'impact rebondissant comprennent un mécanisme d'impact induisant, à chaque impact, un rebond du rotor du moteur dans le sens inverse du sens de travail (sens de vissage ou de dévissage).

Le sens de travail correspond au sens horaire vu depuis l'arrière de l'outil dans le cas du vissage d'une vis ayant un pas à droite, ou dans le sens antihoraire dans le cas du dévissage d'une vis ayant un pas à droite.

Le sens de travail correspond au sens antihoraire dans le cas du vissage d'une vis ayant un pas à gauche, ou dans le sens horaire dans le cas du dévissage d'une vis ayant un pas à gauche.

Au rang de ces clés à choc à mécanisme d'impact rebondissant figurent notamment :

- les mécanismes d'impact de type Maurer : « Twin Hammer », « Twin lobe », « double dogs » en langue anglaise ;
- « single dog » en langue anglaise ;
- « rocking dog » en langue anglaise ;
- « two jaws » en langue anglaise ;
- « pin clutch » en langue anglaise ;
- ...

Le brevet européen EP-B1-3 653 339 décrit un procédé de contrôle du couple appliqué lors d'une opération de vissage/dévissage au moyen d'un dispositif de vissage, selon le préambule de la revendication 1. Ce document décrit aussi dispositif de contrôle du couple appliqué par un dispositif de vissage/dévissage permettant la réalisation d'opérations de vissage/dévissage, selon le préambule de la revendication 14, et décrit de façon encore plus particulière une clé à choc électrique à mécanisme d'impact rebondissant.

Lorsque l'on procède à la réalisation d'une opération de vissage, il est souvent souhaité de serrer l'assemblage à un couple de serrage donné. Généralement les clés à choc n'intègrent pas de moyens de mesure du couple de serrage. Parfois, les moyens de contrôle sont aptes à compter le nombre d'impact et stopper la visseuse lorsque ce nombre atteint un seuil prédéterminé. Plus rarement, certaines clés à choc comprennent des moyens de mesure du couple de serrage délivré au niveau de l'organe de sortie et des moyens de commande permettant de stopper l'opération de vissage lorsque le couple de serrage atteint la valeur souhaitée.

De telles approches sont efficaces et donnent généralement des résultats satisfaisants en termes de fiabilité.

Toutefois, il est possible d'améliorer encore la précision des clés à choc électriques à mécanisme d'impact rebondissant.

**3. Objectifs de l'invention**

L'invention a notamment pour objectif d'apporter une solution efficace à au moins certains de ces différents problèmes.

En particulier, selon au moins un mode de réalisation, un objectif de l'invention est de foumir une clé à choc électrique à mécanisme d'impact rebondissant qui permet de réaliser de manière fiable et efficace une opération de vissage.

Notamment, l'invention a pour objectif, selon au moins un mode de réalisation, de fournir une telle clé à choc qui permet de contrôler efficacement le couple de serrage délivré au cours d'une opération de vissage.

Un autre objectif de l'invention est, selon au moins un mode de réalisation, de fournir une telle clé à choc qui permet de stopper une opération de vissage lorsque le couple de serrage atteint le couple souhaité.

Un autre objectif de l'invention est, dans au moins un mode de réalisation, de procurer une telle clé à choc qui soit simple de conception et à mettre en œuvre.

## 4. Présentation de l'invention

Pour cela, l'invention propose un procédé de contrôle du couple appliqué lors d'une opération de vissage/dévissage au moyen d'un dispositif de vissage comprenant :

- un moteur électrique muni d'un rotor ;
- un organe de sortie susceptible d'être entrainé en rotation ;
- un mécanisme d'impact rebondissant lié rigidement audit rotor et audit organe de sortie,

  ledit procédé comprenant une alimentation dudit moteur induisant un entrainement dudit mécanisme d'impact par ledit rotor et un entrainement en rotation de manière périodique dudit organe de sortie par ledit mécanisme d'impact, l'entrainement dudit mécanisme d'impact générant la survenue d'une pluralité d'impacts successifs à l'issue de chacun desquels ledit rotor tourne dans un rebond dans le sens inverse de l'opération de vissage/dévissage.

Selon l'invention, un tel procédé comprend :

- une étape de détermination d'une fréquence de rotation maximale atteinte par ledit rotor lors du rebond consécutif à la survenue de chacun desdits impacts dans ledit mécanisme d'impact, et
- une étape d'arrêt de ladite opération de vissage/dévissage lorsque ladite fréquence de rotation maximale atteint un seuil prédéterminé correspondant à niveau de couple prédéterminé.

Ainsi, l'invention consiste à déterminer au cours de chaque rebond, la fréquence maximale de rebond du rotor et de comparer cette fréquence maximale à un seuil prédéterminée correspondant à un couple prédéterminé de serrage, puis de stopper le dispositif de vissage/dévissage lorsque ce seuil est atteint. Il est ainsi possible de contrôler une opération de vissage/dévissage sans mesure du couple de serrage.

Selon une variante possible, ladite étape de détermination d'une fréquence de rotation maximale atteinte par le rotor lors du rebond dudit rotor comprend une étape de détermination d'une fréquence instantanée de rotation atteinte par ledit rotor lors du rebond consécutif à la survenue de chacun desdits impacts dans ledit mécanisme d'impact, ladite fréquence de rotation maximale correspondant à la valeur maximale de la fréquence instantanée de rotation à la suite de chaque impact.

Selon une variante possible, ladite étape de détermination d'une fréquence de rotation maximale atteinte par le rotor lors du rebond dudit rotor comprend une mesure de ladite fréquence de rotation au moyen d'un capteur de vitesse.

Selon une variante possible, ladite étape de détermination d'une fréquence de rotation maximale atteinte par ledit rotor lors du rebond comprend :

- une étape de mesure de l'angle de rotation dudit rotor en fonction du temps au moyen d'un capteur d'angle, et
- une étape de détermination de la dérivée par rapport au temps de l'angle mesuré à ladite étape de mesure de l'angle.

Selon une variante possible, l'alimentation dudit moteur met en œuvre des moyens de contrôle de l'alimentation du moteur, ladite étape de détermination de ladite fréquence de rotation maximale atteinte par le rotor lors du rebond dudit rotor comprenant :

- une étape d'extraction et/ou de calcul de grandeurs physiques issues desdits moyens de contrôle de l'alimentation, et
- une étape de détermination de ladite fréquence de rotation maximale atteinte par le rotor lors du rebond dudit rotor en tenant compte desdites grandeurs physiques extraites et/ou calculées.

Selon une variante possible, ladite alimentation dudit moteur met en œuvre une commande vectorielle générant deux consignes de tension Ud et Uq à partir d'une consigne de courant Id, d'une consigne de courant Iq, d'une mesure des trois courants de phase Ia, Ib et Ic et d'une mesure de la position angulaire du rotor.

Selon une variante possible, ladite alimentation dudit moteur met en œuvre une commande BLDC.

Selon une variante possible, ladite alimentation dudit moteur met en œuvre une commande sinus.

Selon une variante possible, ladite commande vectorielle comprend :

- le calcul de transformées de Clarke/Park à partir desdits courants de phase la, Ib et Ic et la position angulaire du rotor donnant comme résultat deux intensités Iq, Id,
- l'extraction d'au moins une desdites consignes de tension Ud ou Uq,

ladite étape de détermination de ladite fréquence de rotation maximale atteinte par le rotor lors du rebond dudit rotor tenant compte desdites intensités Id, Iq et d'au moins une desdites consignes de tension Ud ou Uq.

Selon une variante possible, ladite commande vectorielle comprend :

- le calcul d'une transformée de Park inverse desdites consignes de tension Uq et Ud donnant comme résultat des tensions $U\alpha$ et $U\beta$, et
- le calcul d'une transformée de Clarke desdits courants de phases la Ib et Ic donnant comme résultat des intensités $I\alpha$ et $I\beta$,

ladite étape de détermination de ladite fréquence de rotation maximale atteinte par le rotor lors du rebond dudit rotor tenant compte desdites tensions $U\alpha$ et $U\beta$ et desdites intensités $I\alpha$ et $I\beta$.

Selon une variante possible, ledit moteur est à courant continu et lesdites grandeurs physiques extraites et/ou calculées comprenant :

- le courant appliqué ou mesuré circulant dans ledit moteur,
- la tension appliquée ou mesurée aux bornes dudit moteur.

Selon une variante possible, ledit moteur est triphasé et lesdites grandeurs physiques extraites et/ou calculées comprenant:

- au moins deux des courants appliqués ou mesurés dans les phases dudit moteur,
- des tensions appliquées ou mesurées aux niveau des phases dudit moteur.

Selon une variante possible, un procédé selon l'invention comprend, à un instant donné, la mise en œuvre de plusieurs étapes de détermination de ladite fréquence de rotation maximale atteinte par le rotor lors du rebond dudit rotor, lesdites étapes de détermination étant de natures différentes, et une étape de fusion des résultats obtenus par la mise en œuvre de chacune desdites étape de nature différentes de détermination de ladite fréquence de rotation maximale atteinte par le rotor lors du rebond dudit rotor.

L'invention conceme également un dispositif de contrôle du couple appliqué par un dispositif de vissage/dévissage permettant la réalisation d'opérations de vissage/dévissage, ledit dispositif de vissage/dévissage comprenant :

- un moteur électrique muni d'un rotor ;
- un organe de sortie susceptible d'être entrainé en rotation ;
- un mécanisme d'impact rebondissant lié rigidement audit rotor et audit organe de sortie,

ledit dispositif de contrôle comprenant des moyens de contrôle de l'alimentation dudit moteur aptes à induire un entrainement dudit mécanisme d'impact par ledit rotor et un entrainement en rotation de manière périodique dudit organe de sortie par ledit mécanisme d'impact, l'entrainement dudit mécanisme d'impact générant la survenue d'une pluralité d'impacts successifs à l'issue de chacun desquels ledit rotor tourne dans un rebond dans le sens inverse de l'opération de vissage/dévissage.

Selon l'invention, ledit dispositif comprend :

- des moyens de détermination d'une fréquence de rotation maximale atteinte par ledit rotor lors du rebond consécutif à la survenue de chacun desdits impacts dans ledit mécanisme d'impact, et
- des moyens de commande aptes générer l'arrêt d'une opération de vissage/dévissage en cours lorsque ladite fréquence de rotation maximale atteint un seuil prédéterminé correspondant à niveau de couple prédéterminé.

Selon une variante possible, lesdits moyens de détermination d'une fréquence de rotation maximale atteinte par le rotor lors du rebond dudit rotor comprennent des moyens de détermination d'une fréquence instantanée de rotation atteinte par ledit rotor lors du rebond consécutif à la survenue de chacun desdits impacts dans ledit mécanisme d'impact, ladite fréquence de rotation maximale correspondant à la valeur maximale de la fréquence instantanée de rotation à la suite de chaque impact.

Selon une variante possible, lesdits moyens de détermination d'une fréquence de rotation maximale atteinte par le rotor lors du rebond dudit rotor comprennent un capteur de vitesse.

Selon une variante possible, lesdits moyens de détermination d'une fréquence de rotation maximale atteinte par ledit rotor lors du rebond comprennent :

- des moyens de mesure de l'angle de rotation dudit rotor en fonction du temps, et
- des moyens de détermination de la dérivée par rapport au temps de l'angle mesuré par lesdits moyens de mesure de l'angle.

Selon une variante possible, lesdits moyens de détermination de ladite fréquence de rotation maximale atteinte par le rotor lors du rebond dudit rotor comprennent des moyens d'extraction et/ou de calcul de grandeurs physiques issues desdits moyens de contrôle de l'alimentation, lesdits moyens de détermination de ladite fréquence de rotation maximale atteinte par le rotor lors du rebond dudit rotor étant aptes à déterminer ladite fréquence de rotation maximale en tenant compte desdites grandeurs physiques extraites et/ou calculées.

Selon une variante possible, lesdits moyens de contrôle de l'alimentation dudit moteur mettent en œuvre une commande vectorielle apte à générer deux consignes de tension Ud et Uq à partir d'une consigne de courant Id, d'une consigne de courant Iq, d'une mesure des trois courants de phase la, Ib et Ic et d'une mesure de la position angulaire du rotor.

Selon une variante possible, lesdits moyens de contrôle de l'alimentation dudit moteur mettent en œuvre une commande BLDC.

Selon une variante possible, lesdits moyens de contrôle de l'alimentation dudit moteur mettent en œuvre une commande sinus.

Selon une variante possible, ladite commande vectorielle comprend des moyens de calcul de transformées de Clarke/Park à partir desdits courants de phase la, Ib et Ic donnant comme résultat deux intensités Iq, Id, lesdits moyens de calcul et/ou d'extraction étant aptes à extraire au moins une desdites consignes de tension Ud ou Uq, lesdits moyens de détermination de ladite fréquence de rotation maximale atteinte par le rotor lors du rebond dudit rotor étant aptes à déterminer ladite fréquence maximale de rotation en tenant compte desdites intensités Id, Iq et d'au moins une desdites consignes de tension Ud ou Uq.

Selon une variante possible, ladite commande vectorielle comprend des moyens de calcul d'une transformée de Park inverse desdites consignes de tension Uq et Ud donnant comme résultat des tensions $U\alpha$ et $U\beta$, et des moyens de calcul d'une transformée de Clarke desdits courants de phases la Ib et Ic donnant comme résultat des intensités $I\alpha$ et $I\beta$, lesdits moyens de détermination de ladite fréquence de rotation maximale atteinte par le rotor lors du rebond dudit rotor étant aptes à déterminer ladite fréquence de rotation maximale en tenant compte desdites tensions $U\alpha$ et $U\beta$ et desdites intensités $I\alpha$ et $I\beta$.

Selon une variante possible, ledit moteur étant à courant continu et lesdites grandeurs physiques extraites et/ou calculées par lesdits moyens de calcul et/ou d'extraction comprenant :

- le courant appliqué ou mesuré circulant dans ledit moteur,
- la tension appliquée ou mesurée aux bornes dudit moteur.

Selon une variante possible, ledit moteur étant triphasé et lesdites grandeurs physiques extraites et/ou calculées par lesdits moyens de calcul et/ou d'extraction comprenant :

- au moins deux des courants appliqués ou mesurés dans les phases dudit moteur,
- des tensions appliquées ou mesurées aux niveau des phases dudit moteur.

L'invention concerne également un dispositif de vissage/dévissage comprenant :

- un moteur électrique muni d'un rotor ;
- un organe de sortie susceptible d'être entrainé en rotation ;
- un mécanisme d'impact rebondissant lié rigidement audit rotor et audit organe de sortie,

ledit dispositif comprenant un dispositif de contrôle selon l'une quelconque des variantes ci-dessus.

L'invention concerne également un produit programme d'ordinateur comprenant des lignes d'instructions de code permettant l'exécution d'un procédé selon l'une quelconque des variantes ci-dessus lorsqu'il est lu par un ordinateur.

## 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

[Fig 1] la figure 1 illustre une vue en coupe longitudinal d'un exemple de clé à chic selon l'invention ;

[Fig 2] la figure 2 illustre une vue en éclaté du mécanisme d'impact de la clé à choc illustrée la figure 1 ;

[Fig 3] la figure 3 illustre une vue en coupe suivant l'axe A-A de la figure 1 ;

[Fig 4] la figure 4 illustre le schéma d'une commande vectorielle ;

[Fig 5] la figure 5 illustre un détail de la commande vectorielle illustrée à la figure 4 ;

[Fig 6] la figure 6 illustre le modèle électrique d'un moteur triphasé ;

[Fig 7] la figure 7 illustre un détail du dipôle de phase d'un moteur triphasé ;

[Fig 8] la figure 8 illustre le modèle électrique d'un moteur à courant continu ;

[Fig 9] la figure 9 illustre le schéma d'une commande à 6 états ;

[Fig 10] la figure 10 illustre le schéma d'une commande sinusoïdale ;

[Fig 11] la figure 11 illustre un procédé selon l'invention ;

[Fig 12] la figure 12 illustre différentes variantes d'une étape de détermination de la fréquence de rotation maximale de rebond d'un rotor d'un procédé selon l'invention.

## 6. Description de modes de réalisation particuliers

### 6.1. Architecture

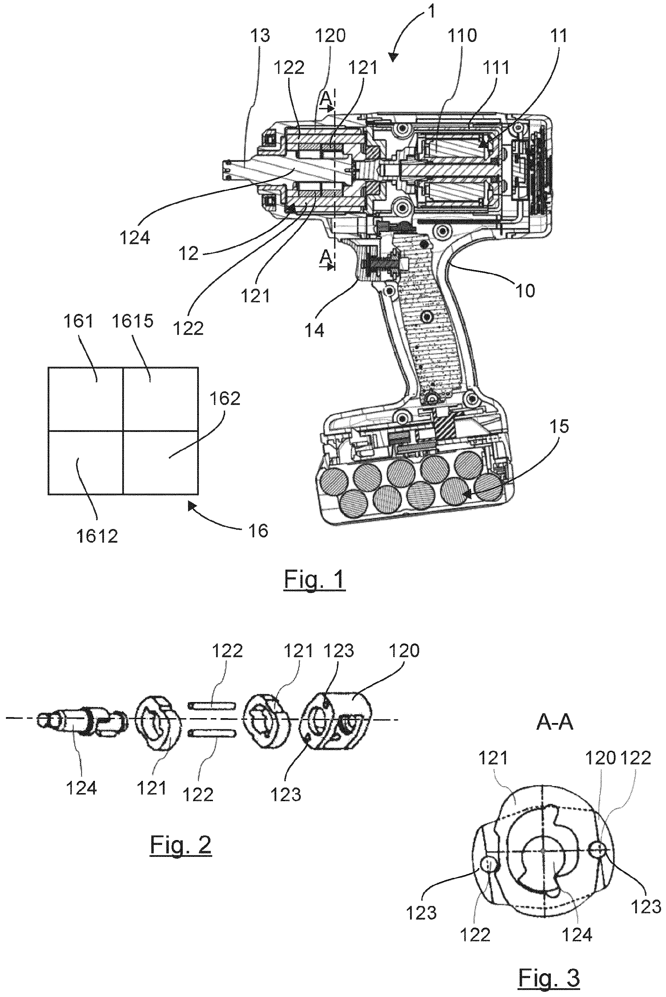

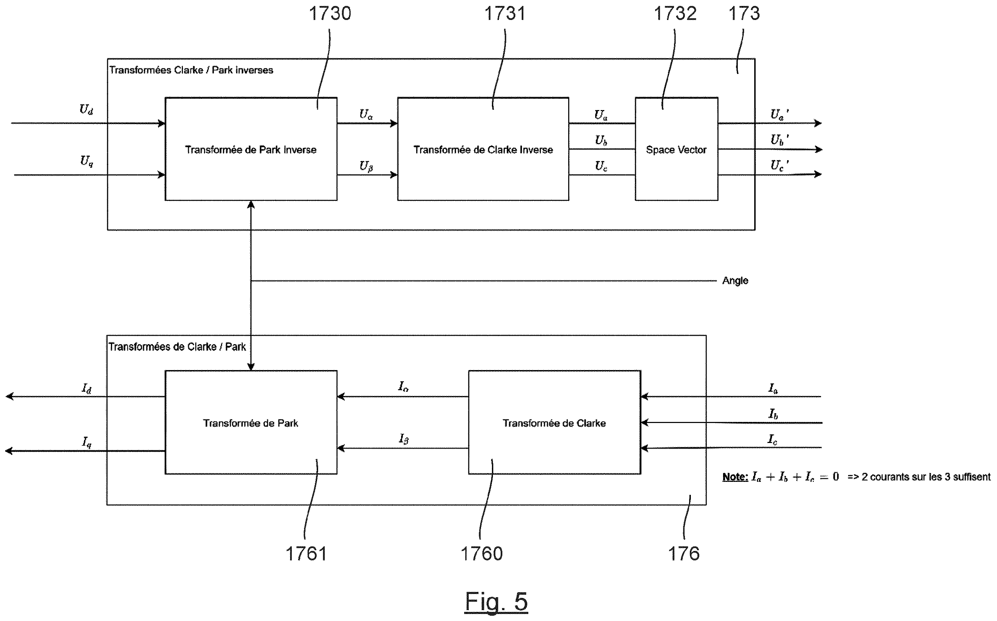

On présente en rotation avec les figures 1 à 10, un exemple d'une clé à choc selon l'invention comprenant un dispositif de contrôle du couple appliqué.

Une telle clé à choc 1 comprend un carter 10 logeant un moteur électrique 11, un mécanisme d'impact 12 et un organe de sortie rotatif 13 prévu pour coopérer avec une douille de vissage/dévissage. La clé à choc comprend une gâchette d'actionnement 14.

Le moteur 11 comprend un rotor 111 et un stator 110. Il s'agit d'un moteur électrique. Le moteur sera préférentiellement de type synchrone à aimants permanents. Il pourra alternativement s'agir de tout autre type de moteur électrique comme par exemple un moteur à courant continu, un moteur asynchrone, un moteur à réluctance variable, un moteur pas à pas... Il pourra être mono ou multi-phasé.

Le rotor 111 est relié directement à l'entrée du mécanisme d'impact 12. En d'autres termes, le rapport de transmission entre le rotor et l'entrée du mécanisme d'impact 12 est égal à 1.

Le mécanisme d'impact 12 est du type rebondissant. Ainsi que cela va ressortir plus clairement par la suite, il s'agit ici d'un mécanisme d'impact rebondissant de type Maurer. Il pourrait toutefois s'agit de tout autre mécanisme d'impact rebondissant comme par exemple, et de manière non limitative :

- « single dog » en langue anglaise ;
- « rocking dog » en langue anglaise ;
- « two jaws » en langue anglaise ;
- « pin clutch » en langue anglaise ;
- bloc hydraulique;
- ...

Le mécanisme d'impact 12 comprend une cage 120 mobile en rotation en prise directe avec le rotor 111 auquel elle est liée en rotation. La liaison est donc rigide entre le rotor et la cage.

La cage 120 est évidée et loge deux marteaux 121 solidarisés à celle-ci de manière mobile en rotation autour d'axes sensiblement parallèles à l'axe de rotation de la cloche au moyen de goupilles 122 emmanchées dans des trous 123 ménagés à cet effet dans la cloche 120.

Le mécanisme d'impact 12 comprend un carré de sortie 124, s'étendant en partie à l'intérieur des marteaux 121 et de la cloche 120. Le carré de sortie 124 est lié en rotation avec l'organe de sortie rotatif 13.

De manière classique, la cloche 120 entrainée en rotation de façon directe par le moteur 11 déplace les marteaux 121 qui pivotent autour des goupilles 122 et viennent cogner simultanément contre des enclumes liées rigidement à l'arbre de sortie 124 pour transmettre l'énergie cinétique contenue dans les pièces en mouvement (rotor 111, cage 120, marteaux 121) au carré de sortie 124 dans des chocs et entrainer celui-ci en rotation.

De manière générale, un mécanisme d'impact rebondissant comprend :

- un volant d'inertie (ici par la cage 120) ;
- des enclumes (liées au carré de sortie 124) ;
- un dispositif de connexion mécanique entre le volant d'inertie et l'enclume (ici les marteaux 121).

La clé à choc comprend une batterie 15, pour alimenter le moteur 11 en courant électrique. Dans des variantes, la clé à choc pourra ne pas comprendre de batterie mais un câble de raccordement au secteur ou de raccordement à un contrôleur lui-même relié au secteur. Le secteur pourra par exemple être un réseau de distribution alternatif. La batterie, le contrôleur ou le secteur constituent une source de tension électrique.

La clé à choc comprend classiquement des moyens de contrôle de l'alimentation du moteur 16 aptes à induire un entrainement du mécanisme d'impact par le rotor et un entrainement en rotation de manière périodique de l'organe de sortie par le mécanisme d'impact.

L'entrainement du mécanisme d'impact génère la survenue d'une pluralité d'impacts successifs à l'issue de chacun desquels le rotor tourne dans un rebond dans le sens inverse de l'opération de vissage/dévissage en cours.

Plus précisément, au cours d'une opération de vissage, les moyens de contrôle de l'alimentation du moteur alimentent le moteur dans le sens du vissage soit de manière continue si le moteur est contrôlé en courant selon la technique décrite dans le brevet EP-B1-3 653 339 ou bien de manière périodique. Une succession de cycles d'impact se produit alors jusqu'à ce que l'opération de vissage se termine.

Au cours de chaque cycle d'impact, la cloche 120 entrainée en rotation de façon directe par le moteur 11 déplace les marteaux 121 qui pivotent autour des goupilles 122 et viennent cogner simultanément contre des enclumes liées rigidement à l'arbre de sortie 124 pour transmettre l'énergie cinétique contenue dans les pièces en mouvement (rotor 111, cage 120, marteaux 121) au carré de sortie 124 dans un choc et entrainer celui-ci en rotation. Le carré de sortie, i.e. l'organe de sortie, transmet ainsi un couple à l'élément à visser.

Au cours de chaque impact dans le mécanisme d'impact, la transmission entre le moteur et le carré de sortie se déforme et accumule de l'énergie potentielle de déformation sous l'effet du couple développé durant l'impact. Lorsque le couple transmis à l'élément à visser devient insuffisant pour continuer d'entrainer en rotation l'élément à visser, la transmission se détend et l'énergie potentielle de déformation accumulée dans la transmission se reconvertie en énergie cinétique qui conduit le mécanisme d'impact et le rotor à tourner dans le sens du dévissage dans un rebond au cours duquel le rotor atteint une fréquence de rotation maximale en fin de détente.

En assimilant la clé à choc à un ressort (enclume + carré de sortie) et un volant d'inertie, il y a une relation de proportionnalité entre le couple appliqué sur l'élément à visser durant l'impact et la fréquence de rotation maximale atteinte en fin de rebond. En effet, le couple C délivré par la clé à choc varie au cours d'un impact de manière linéaire en fonction de l'angle de déformation de la transmission $\alpha$ selon une formule :

$$C = k.\alpha.$$

Où:

k est une constante correspondant à la raideur de la transmission
$\alpha$ est l'angle de détente qui correspond à l'angle de rotation de la transmission dans le sens inverse de l'opération de vissage/dévissage après blocage de l'élément à visser consécutivement à un choc

L'énergie potentielle de déformation Ep accumulée pendant l'impact peut donc s'exprimer de la manière suivante :

$$Ep = (C.\alpha) / 2$$

$$Ep = (C^2/k) / 2$$

$$Ec = (J.\omega^2) / 2$$

Puis

$$Ec = \mu. Ep$$

Où:

J est l'inertie du rotor suivant son axe de rotation
$\mu$ est le rendement de restitution de l'énergie potentielle en en énergie cinétique
$\omega$ est la fréquence de rotation du rotor maximale en fin de rebond
Ec est l'énergie cinétique du rotor en fin de détente de la transmission
$\mu$ est le rendement de la transmission

Il en résulte que :

$$\mu.(C^2/k) / 2 = J.\omega^2 / 2$$

$$C = \omega.(J.k/\mu)^{1/2}$$

Si l'on considère que J, $\mu$ et K sont constants, le couple de serrage C est proportionnel à la fréquence maximale de rebond $\omega$max en fin de rebond. Il existe donc bien une relation de proportionnalité entre le couple délivré par la clé à choc au cours d'un impact et la fréquence de rotation maximale atteinte en fin de rebond.

Il est ainsi possible de définir un seuil prédéterminé de fréquence de rotation maximale de rebond du rotor $\omega$fin qui corresponde à un couple donné de serrage, autrement dit à un niveau de couple prédéterminé, délivré par la clé à choc et d'assujettir la fin d'une opération de vissage à l'atteinte par la vitesse de rebond du rotor de ce seuil prédéterminé de fréquence de rotation maximale de rebond. Ce seuil de fréquence de rotation maximale de rebond du rotor peut être déterminé expérimentalement en enregistrant au cours d'un essai la valeur de la fréquence maximale de rebond du rotor à l'issue de l'impact ayant permis de serrer l'assemblage au couple souhaité. Un tel procédé de calibration permettra de faire correspondre un couple mesuré par l'outil avec un couple mesuré par un capteur de référence. Alternativement, ce seuil peut être déterminé par le calcul.

Selon le principe de l'invention, le contrôle de la fréquence de rotation du rotor en cours de rebond permet ainsi de réaliser un serrage à un couple donné sans néanmoins devoir mesurer au cours d'une opération de vissage le couple de serrage délivré par la clé à choc.

Cette approche est particulièrement avantageuse en ce qu'elle peut être mises en œuvre au sein des clés à choc ne comprenant pas de capteur de couple de serrage, ce qui constitue la majorité des clés à choc. En outre, les clés à choc mettant en œuvre des capteurs de couple de serrage sont de petit format ne permettant d'atteindre que de faibles couples de serrage. Ainsi, l'approche selon l'invention peut être mis dans toute clé à choc quel qu'en soit la capacité en termes de couple de serrage. La technique selon l'invention permet également de procurer des clés à choc plus robustes que celles mettant en œuvre des capteurs de couple de serrage qui présentent généralement une résistance assez faible aux chocs induits dans le mécanisme de frappe. La technique selon l'invention présente encore l'avantage d'être compacte et moins onéreuse puisqu'elle ne nécessite pas la mise en œuvre d'un capteur de couple encombrant et cher. La technique selon l'invention présente encore l'avantage d'être simple.

Ainsi, les moyens de contrôle comprennent :

- des moyens 161 de détermination de la fréquence de rotation maximale atteinte par le rotor lors du rebond consécutif à la survenu de chacun des impacts dans le mécanisme d'impact, et
- des moyens 162 de commande aptes générer l'arrêt de l'opération de vissage/dévissage en cours lorsque la fréquence de rotation maximale atteint un seuil prédéterminé de fréquence de rotation de rebond $\omega$fin.

L'arrêt de l'opération de vissage en cours peut par exemple correspondre à une coupure de l'alimentation du moteur précédé ou non de la génération d'une consigne d'alimentation induisant le freinage du moteur.

Un dispositif selon l'invention pourrait alternativement ou en complément comprendre des moyens d'affichage du couple effectivement atteint à la fin d'une opération de vissage en cours. Ce couple effectivement atteint sera a priori légèrement supérieur au couple attendu correspondant à la vitesse maximale mesurée.

### i. Variante à capteur de vitesse

Selon une première variante, les moyens 161 de détermination d'une fréquence de rotation maximale atteinte par le rotor lors du rebond du rotor comprennent un capteur de vitesse 1610.

Il pourra préférentiellement s'agir d'une génératrice tachymétrique entrainée par le rotor et délivrant une tension électrique dont la valeur est proportionnelle à la fréquence de rotation du rotor.

Les moyens 161 de détermination de la fréquence de rotation maximale atteinte par le rotor lors du rebond sont configurés pour enregistrer à chaque impact la fréquence maximale de rebond du rotor ω max, la comparer au seuil prédéterminé ωfin de fréquence de rotation de rebond et pour stopper l'opération de vissage/dévissage en cours lorsque ce seuil est atteint.

### ii. Variante à capteur d'angle

Selon une deuxième variante, les moyens 161 de détermination d'une fréquence de rotation maximale atteinte par le rotor lors du rebond du rotor comprennent :

- des moyens 1611 de mesure de l'angle de rotation du rotor en fonction du temps, et
- des moyens 1612 de détermination de la dérivée par rapport au temps de l'angle ainsi mesuré qui correspond à la fréquence de rotation du rotor.

Le capteur d'angle pourra par exemple être :

- un capteur à effet hall ;
- un résolveur ;
- un ou plusieurs aimant(s) et capteur(s) à effet hall tout ou rien ;
- un ou plusieurs aimant(s) et capteur(s) à effet hall linéaires ;
- un encodeur incrémental.

Les moyens de détermination de la dérivée par rapport au temps de l'angle sont des moyens de calcul classiques en soit intégrés aux moyens de contrôle.

### iii. Variante à mesure et/ou extraction de grandeurs physiques issue des moyens de contrôle de l'alimentation du moteur

Selon une troisième variante, les moyens 161 de détermination de la fréquence de rotation maximale de rebond du rotor comprennent des moyens 1615 d'extraction et/ou de calcul de grandeurs physiques issues des moyens de contrôle de l'alimentation, les moyens de détermination de la fréquence de rotation maximale de rebond du rotor étant aptes à déterminer la fréquence de rotation maximale en tenant compte des grandeurs physiques extraites et/ou calculées.

Par extraction, on entend la récupération des valeurs de grandeurs physiques qui sont accessibles en temps réel dans la commande vectorielle. Par mesure, on entend une mesure en temps réel de telles grandeurs physiques.

### iii.1. Moteur triphasé et commande vectorielle

Les moyens de contrôle de l'alimentation du moteur 16 peuvent mettre en œuvre une commande vectorielle, le moteur de la clé à choc étant triphasé.

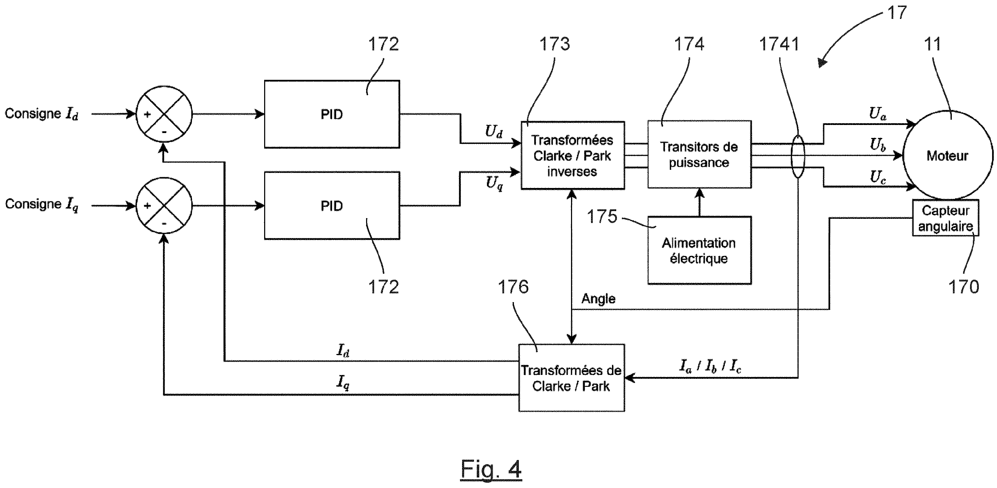

La figure 4 illustre le schéma d'une telle commande vectorielle.

Une telle commande est bien connue de l'homme de l'art, elle permet la transposition des courants statoriques d'un moteur triphasé en 2 composantes orthogonales l'une Iq, proportionnelle au couple électromagnétique du moteur et l'autre Id, représentatif du flux et en général considéré nul.

La commande vectorielle comprend des capteurs de mesure 171 des courants de phases Ia, Ib, et Ic, et un capteur d'angle 170 de rotation du rotor du moteur.

A partir des consignes de courant Id et Iq, la commande vectorielle défini, au moyen de régulateurs PID 172, deux consignes de tension Ud et Uq. Ces consignes de tensions, ainsi que la valeur de l'angle de rotation du rotor, sont délivrées à un module de calcul de Transformées de Clark/Park inverse 173 dont les sorties sont classiquement reliées à une batterie de transistors de puissance 174 qui, en étant reliée à une alimentation électrique 175, permet d'appliquer les tensions Ua, Ub et Uc sur les phases du moteur. Il en résulte les intensités la, Ib, Ic dans les phases du moteur.

Les courants de phases la, Ib et Ic ainsi que l'angle de rotation mesurés sont délivrés à un module de calcul de Transformées de Clarke/Park 176 qui détermine deux intensités Id et Iq. Ces intensités entrent ensuite dans les régulateurs 172 pour définir les consignes de tension Uq et Ud.

### Fréquence de rotation à partir des transformées de Clarke/Park

Selon une variante, les moyens de calcul et/ou d'extraction sont aptes à extraire ou à mesurer :

- les intensités Id, Iq provenant du module de calcul de Transformées de Clarke/Park 176
- au moins une des consignes de tension Ud ou Uq provenant des régulateurs PID 172.

Les moyens de détermination de la fréquence de rotation maximale de rebond du rotor sont aptes à déterminer la fréquence maximale de rotation en tenant compte des intensités Id, Iq provenant du module de calcul de Transformées de Clarke/Park 176 et d'au moins une des consignes de tension Ud ou Uq provenant des régulateurs PID 172.

A partir de l'extraction ou de la mesure de la consigne de tension Uq, les moyens de détermination de la fréquence de rotation maximale de rebond du rotor sont aptes à déterminer en temps réel la fréquence instantanée de rotation $\omega$ de la manière suivante :

$$U_q = E + RI_q - L\omega I_d - L\frac{dI_q}{dt}$$

Où:

E est la force contrélectromotrice du moteur
R est la résistance du moteur
L est l'inductance du moteur

La force contrélectromotrice E du moteur est proportionnelle à la fréquence de rotation du rotor $\omega$ et orientée dans l'axe q du repère tournant du rotor du moteur. Elle s'exprime comme suit :

$$E = K_e\omega$$

Ke est une constante du moteur
On en déduit :

$$U_q = K_e\omega + RI_q - L\omega I_d - L\frac{dI_q}{dt}$$

$$U_d = RI_d - L\omega I_q - L\frac{dI_d}{dt}$$

$$\omega = \frac{U_q - R.I_q + L\frac{dI_q}{dt}}{K_e - L.I_d}$$

Puis, à partir de la fréquence de rotation instantanée $\omega$ déterminée en temps réel, les moyens de détermination de la fréquence de rotation maximale déterminent la fréquence de rotation maximale $\omega$max comme étant la valeur maximale de la fréquence de rotation instantanée enregistrée en temps réel.

A partir de l'extraction ou de la mesure de la consigne de tension Ud, les moyens de détermination de la fréquence de rotation maximale de rebond du rotor sont aptes à déterminer en temps réel la fréquence instantanée de rotation $\omega$ de la manière suivante :

$$\omega = \frac{R.\,I_d - U_d + L\frac{dI_d}{dt}}{L.\,I_q}$$

Puis, à partir de la fréquence de rotation instantanée $\omega$ déterminée en temps réel, les moyens de détermination de la fréquence de rotation maximale déterminent la fréquence de rotation maximale $\omega$max comme étant la valeur maximale de la fréquence de rotation instantanée enregistrée en temps réel.

Cette autre formule de détermination de la fréquence de rotation peut conduire à un résultat légèrement différent de la précédente compte tenu des erreurs de mesure. Elle peut servir à confirmer le résultat précédent ou détecter une éventuelle incohérence dans la détermination de la fréquence de rotation.

Les moyens de détermination de la fréquence de rotation maximale de rebond du rotor calculent en temps réel au cours de chaque rebond la fréquence instantanée de rotation $\omega$ du rotor et enregistrent au cours de chaque rebond la valeur maximale $\omega$max.

Ils comparent ensuite la valeur $\omega$max au seuil prédéterminé de fin d'opération de vissage/dévissage $\omega$fin et commandent l'arrêt de l'opération de vissage/dévissage en cours lorsque $\omega$max atteint ce seuil.

### *Fréquence de rotation à partir des transformées de Clark et Park inverse*

Le module de calcul de Transformées de Clarke/Park inverse 173 comprend :

- des moyens de calcul 1730 d'une transformée de Park inverse des consignes de tension Uq et Ud donnant comme résultat des tensions U$\alpha$ et U$\beta$,
- des moyens de calcul 1731 d'une transformée de Clark inverse des tensions U$\alpha$ et U$\beta$ donnant comme résultats des tensions Ua, Ub et Uc,
- des moyens de calcul 1732 d'un vecteur spatial à partir des tensions Ua, Ub et Uc donnant des tensions Ua', Ub' et Uc'.

Ua, Ub et Uc sont référencées par rapport au Neutre qui n'est généralement pas connecté électriquement à la commande du moteur.

Ua', Ub' et Uc' sont les tensions effectivement appliquées sur les phases par rapport à la masse du dispositif de commande (onduleur).

Le module de calcul de Transformées de Clarke/Park 176 comprend :

- des moyens de calcul 1760 d'une transformée de Clarke des courants de phases Ia Ib et Ic donnant comme résultat des intensités I$\alpha$ et I$\beta$,
- des moyens de calcul 1761 d'une transformée de Park des intensités I$\alpha$ et I$\beta$ donnant les intensités Id et Iq.

Selon une variante, les moyens de calcul et/ou d'extraction sont aptes à extraire ou à mesurer les tensions U$\alpha$ et U$\beta$ et les intensités I$\alpha$ et I$\beta$.

Les moyens de détermination de la fréquence de rotation maximale de rebond du rotor sont alors aptes à déterminer la fréquence de rotation maximale en tenant compte des tensions U$\alpha$ et U$\beta$ et desdites intensités I$\alpha$ et I$\beta$ en appliquant les formules suivantes :

$$U_\alpha = E_\alpha + RI_\alpha - L\frac{dI_\alpha}{dt}$$

$$U_\beta = E_\beta + RI_\beta - L\frac{dI_\beta}{dt}$$

$$E_\alpha = U_\alpha - RI_\alpha + L\frac{dI_\alpha}{dt}$$

$$E_\beta = U_\beta - RI_\beta + L\frac{dI_\beta}{dt}$$

$$E_\alpha = K_e\,\omega\cos(\theta)$$

$$E_\beta = K_e\,\omega\sin(\theta)$$

$$\sqrt{E_\alpha^2 + E_\beta^2} = \sqrt{K_e^2\,\omega^2\cos(\theta)^2 + K_e^2\,\omega^2\sin(\theta)^2}$$

$$\sqrt{E_\alpha^2 + E_\beta^2} = K_e\,\omega\sqrt{\cos(\theta)^2 + \sin(\theta)^2}$$

$$\sqrt{E_\alpha^2 + E_\beta^2} = K_e\,\omega$$

$$\theta = \arctan\left(\frac{E_\beta}{E_\alpha}\right)$$

$$\omega = \frac{d\theta}{dt}$$

$$\omega = \frac{\sqrt{E_\alpha^2 + E_\beta^2}}{K_e}$$

Les moyens de détermination de la fréquence de rotation maximale de rebond du rotor sont aptes à calculer en temps réel au cours de chaque rebond la fréquence de rotation $\omega$ du rotor et à enregistrer au cours de chaque rebond la valeur maximale $\omega$max.

Ils sont aptes à comparer ensuite la valeur $\omega$max à un seuil prédéterminé de fin d'opération de vissage/dévissage $\omega$fin et à commander l'arrêt de l'opération de vissage/dévissage en cours lorsque $\omega$max atteint ce seuil.

*Fréquence de rotation à partir des courants et tensions de phases*

Selon une variante, les moyens de calcul et/ou d'extraction sont aptes à mesurer ou extraire les courants et tensions de phases Ia, Ib, Ic, Ua, Ub, Uc.

Puis, pour chaque phase n, les moyens de détermination de la fréquence de rotation maximale de rebond du rotor sont aptes à calculer Ea, Eb et Ec, i.e. les parts de la force contrélectromotrice de chaque phase, en appliquant les formules suivantes, en y remplaçant n par a, b et c :

$$U_n = E_n + RI_n - L\frac{dI_n}{dt}$$

$$E_n = U_n - RI_n + L\frac{dI_n}{dt}$$

Les moyens de détermination de la fréquence de rotation maximale de rebond du rotor sont alors aptes à déterminer $E\alpha$ et $E\beta$ à partir de Ea, Eb et Ec, grâce à la transformée de Clarke, puis à calculer en temps réel à partir de $E\alpha$ et $E\beta$ comme expliqué plus haut, la fréquence instantanée de rotation $\omega$ puis la fréquence maximale de rotation $\omega$max enregistrée au cours du rebond.

Ils sont aptes à comparer ensuite la valeur $\omega$max à un seuil prédéterminé de fin d'opération de vissage/dévissage $\omega$fin et à commander l'arrêt de l'opération de vissage/dévissage en cours lorsque $\omega$max atteint ce seuil.

### iii.1.2. Moteur à courant continu

Dans une variante, le moteur de la clé à choc est un moteur à courant continu aux bornes duquel est appliquée une tension Um et dans lequel circule un courant lm.

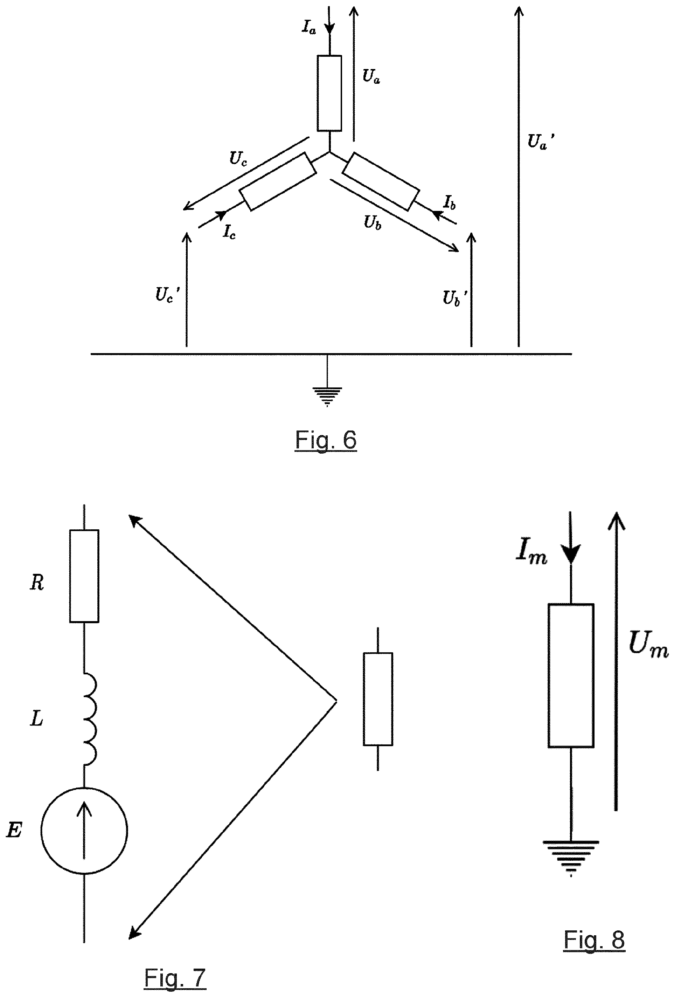

La figure 8 illustre le modèle d'un moteur à courant continu.

Les grandeurs physiques extraites et/ou calculées par les moyens de calcul et/ou d'extraction comprennent alors :

- le courant lm appliqué ou mesuré circulant dans le moteur,
- la tension Um appliquée ou mesurée aux bornes du moteur.

Dans ce cas, les moyens de détermination de la fréquence de rotation maximale de rebond du rotor sont aptes à déterminer la fréquence de rotation maximale en appliquant les formules suivantes :

$$U_m = E + RI_m - L\frac{dI_m}{dt}$$

*E*: Tension contre électromotrice elle est proportionnelle à la vitesse de rotation

$$E = K_e\omega$$

$$U_m = K_e\omega + RI_m - L\frac{dI_m}{dt}$$

$$\omega = \frac{U_m - R.I_m + L\frac{dI_m}{dt}}{K_e}$$

Ke étant une constante du moteur

Les moyens de détermination de la fréquence de rotation maximale de rebond du rotor sont aptes à calculer en temps réel au cours de chaque rebond la fréquence de rotation $\omega$ du rotor et à enregistrer au cours de chaque rebond la valeur maximale $\omega$max.

Ils sont aptes à comparer ensuite la valeur ωmax à un seuil prédéterminé de fin d'opération de vissage/dévissage ωfin et à commander l'arrêt de l'opération de vissage/dévissage en cours lorsque ωmax atteint ce seuil.

**iii.2. Variantes de commandes**

Dans des variantes, plutôt que vectorielle, la commande du moteur pourrait être de type 6 états ou sinus.

*iii.2.1. Commande à 6 états*

Une commande à 6 états est plus communément appelée en langue anglaise une commande 6-step ou une commande BLDC.

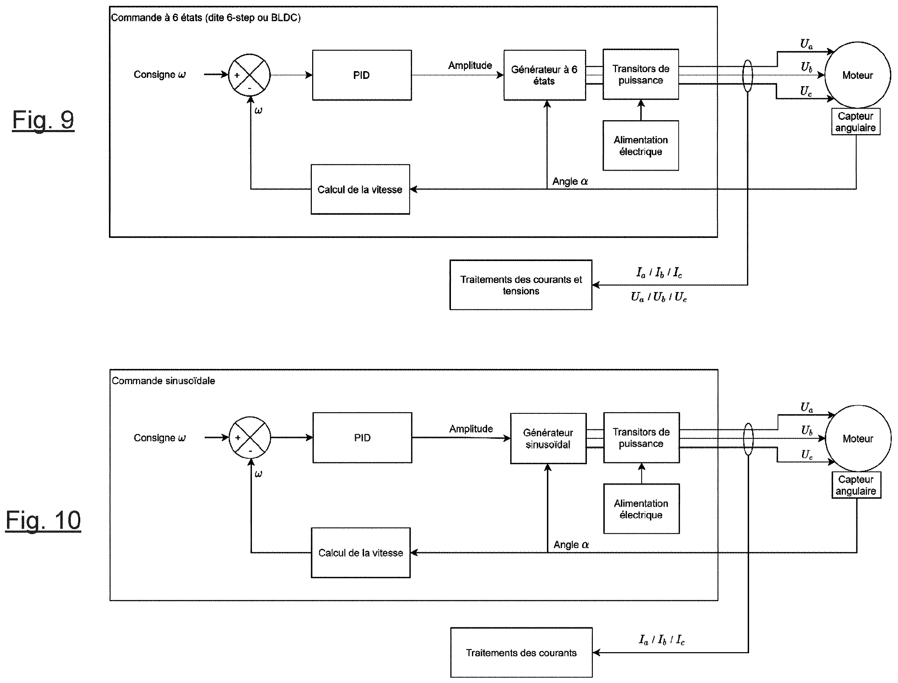

La figure 9 illustre le schéma d'une telle commande.
De manière classique et connue de l'homme du métier, une telle commande applique à chaque instant, sur la base d'une consigne de vitesse ω, une tension Ua, Ub, Uc sur uniquement deux des trois phases du moteur. Les deux phases alimentées sont choisies en fonction de la position angulaire du rotor du moteur (angle α). Les deux phases choisies peuvent être alimentée pour que la masse soit appliqué à la première des deux phases alimentées et la tension de la batterie ou du secteur à la seconde des deux phases alimentées, ou inversement. Cela donne six combinaisons associées à six parties de chacune 60° dans un tour électrique du moteur. La tension appliquée est modulée en fonction de l'écart entre la vitesse mesurée et la consigne de vitesse. La phase qui n'est pas alimentée ne se voit pas imposer une tension, mais un courant nul.
Dans le cadre de la mise en œuvre d'une commande de type à 6-états, les moyens de mesure et/ou d'extraction sont aptes à mesurer en temps réel des tensions appliquées et les courants circulant dans les deux phases alimentées, le courant nul appliqué et la tension aux bornes de la phase non alimentée. En d'autres termes, ils sont aptes à mesurer et/ à extraire les tensions de phases Ua, Ub et Uc et les courants de phases la, Ib et Ic.
Puis, pour chaque phase n, les moyens de détermination de la fréquence de rotation maximale de rebond du rotor sont aptes à calculer Ea, Eb et Ec i.e. les parts de la force contrélectromotrice de chaque phase, en appliquant les formules suivantes en y remplaçant n par a, b et c :

$$U_n = E_n + RI_n - L\frac{dI_n}{dt}$$

$$E_n = U_n - RI_n + L\frac{dI_n}{dt}$$

Les moyens de détermination de la fréquence de rotation maximale de rebond du rotor sont alors aptes à déterminer Eα et Eβ à partir de Ea, Eb et Ec, grâce à la transformée de Clarke, puis à calculer en temps réel à partir de Eα et Eβ comme expliqué plus haut, la fréquence instantanée de rotation ω puis la fréquence maximale de rotation ωmax enregistrée au cours du rebond.
Ils sont aptes à comparer ensuite la valeur ωmax à un seuil prédéterminé de fin d'opération de vissage/dévissage ωfin et à commander l'arrêt de l'opération de vissage/dévissage en cours lorsque ωmax atteint ce seuil.

*iii.2.2. Commande sinusoïdale*

La figure 10 illustre le schéma d'une commande de type sinusoïdale.
De manière classique et connue de l'homme du métier, une telle commande ne se base pas sur la mesure du courant. La vitesse instantanée ω du moteur est mesurée en temps réel, comparée à une consigne de vitesse et la commande génère une consigne d'amplitude de tension à appliquer au moteur pour amener la vitesse mesurée à rejoindre la consigne de vitesse. La tension Ua, Ub, Uc appliquée à chacune des phases est calculée à partir de l'amplitude et de la position angulaire α du rotor. Chacune des tensions de phase décrit une fonction sinusoïdale déphasées de 120° entre elles pendant que le rotor fait un tour électrique.
Dans le cadre de la mise en œuvre d'une commande de type sinusoïdale, les moyens de mesure et/ou d'extraction sont aptes à mesurer en temps réel les tensions appliquées et les courants circulant dans les phases du moteur. En d'autres termes, ils sont aptes à mesurer et/ à extraire les tensions de phases Ua, Ub et Uc et les courants de

phases Ia, Ib et Ic.

Puis, pour chaque phase n, les moyens de détermination de la fréquence de rotation maximale de rebond du rotor sont aptes à calculer Ea, Eb et Ec, i.e. les parts de la force contrélectromotrice de chaque phase, en appliquant les formules suivantes en y remplaçant n par a, b et c :

$$U_n = E_n + RI_n - L\frac{dI_n}{dt}$$

$$E_n = U_n - RI_n + L\frac{dI_n}{dt}$$

Les moyens de détermination de la fréquence de rotation maximale de rebond du rotor sont alors aptes à déterminer $E\alpha$ et $E\beta$ à partir de Ea, Eb et Ec grâce à la transformée de Clarke, puis à calculer en temps réel à partir de $E\alpha$ et $E\beta$ comme expliqué plus haut, la fréquence instantanée de rotation $\omega$ puis la fréquence maximale de rotation $\omega$max comme étant la fréquence de rotation maximale enregistrée au cours du rebond.

Ils sont aptes à comparer ensuite la valeur $\omega$max à un seuil prédéterminé de fin d'opération de vissage/dévissage $\omega$fin et à commander l'arrêt de l'opération de vissage/dévissage en cours lorsque $\omega$max atteint ce seuil.

### 6.2. Procédé

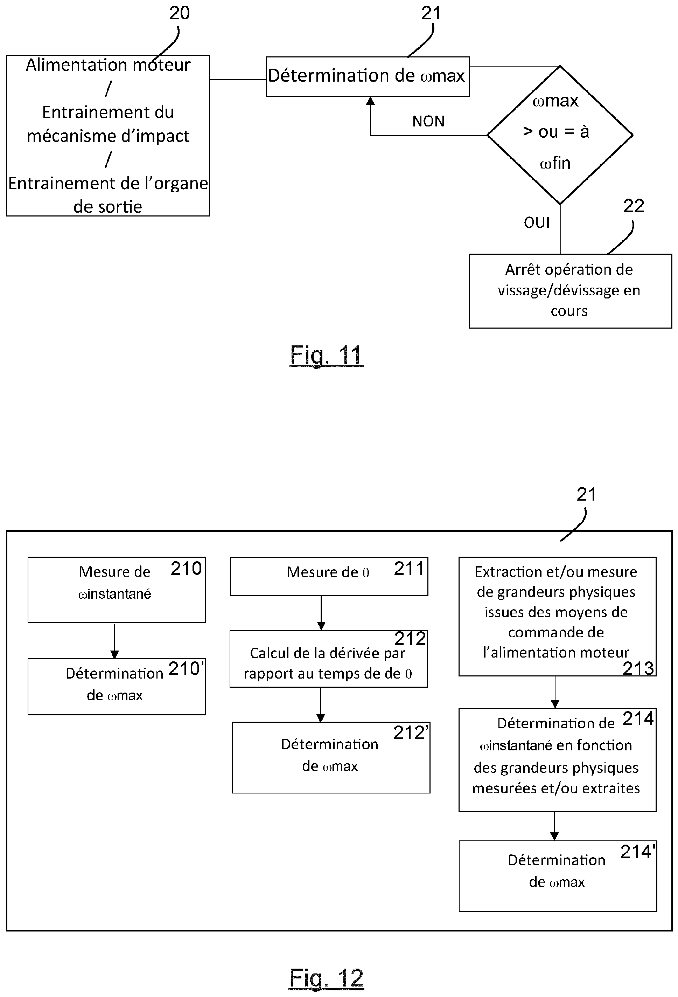

On présente en relation avec les figures 11 et 12, un exemple de procédé de contrôle du couple appliqué lors de la réalisation d'une opération de vissage/dévissage au moyen d'un dispositif de vissage selon l'invention comme ceux qui viennent d'être décrits à titre d'exemples.

De manière générale, un tel procédé comprend une phase 20 de vissage ou de dévissage, comprenant une alimentation du moteur induisant un entrainement du mécanisme d'impact par le rotor et un entrainement en rotation de manière périodique de l'organe de sortie par le mécanisme d'impact. L'entrainement du mécanisme d'impact génère la survenue d'une pluralité d'impacts successifs à l'issue de chacun desquels le rotor tourne dans un rebond dans le sens inverse de l'opération de vissage/dévissage en cours.

Un tel procédé comprend en outre les phases suivantes qui sont mises en œuvre de manière continue au cours de la phase 20 :

- une étape 21 de détermination d'une fréquence de rotation maximale $\omega$max atteinte par le rotor lors du rebond consécutif à la survenu de chacun des impacts dans le mécanisme d'impact, et
- une étape 22 d'arrêt de l'opération de vissage/dévissage lorsque la fréquence de rotation maximale $\omega$max atteint un seuil prédéterminé $\omega$fin.

### 6.2.1. Variante à capteur de vitesse

Selon une variante, l'étape 21 de détermination d'une fréquence de rotation maximale atteinte par le rotor lors du rebond du rotor comprend une étape 210 de mesure en temps réel de la fréquence instantanée de rotation $\omega$ au moyen du capteur de vitesse.

Au cours de l'opération de vissage/dévissage, cette fréquence de rotation est mesurée en temps réel de manière continue.

L'étape 21 comprend en outre une étape 210' de détection de la valeur maximale de la fréquence instantanée de rotation $\omega$ au cours du rebond, cette valeur étant égale à la fréquence maximale de rotation $\omega$max au cours du rebond du rotor.

### 6.2.2. Variante à capteur d'angle

Selon une variante, l'étape 21 de détermination d'une fréquence de rotation maximale atteinte par le rotor lors du rebond comprend :

- une étape 211 de mesure de l'angle instantané de rotation $\theta$ du rotor en fonction du temps, et

- une étape 212 de détermination de la dérivée par rapport au temps de l'angle θ mesuré à le étape de mesure de l'angle, cette dérivée correspondant à la fréquence instantanée de rotation du rotor ω ;
- une étape 212' de détermination de la fréquence maximale de rebond ωmax du rotor au cours du rebond comme étant la vitesse instantanée maximale enregistrée au cours du rebond, laquelle est égale au maximum de la dérivée par rapport au temps de l'angle θ.

Au cours de l'opération de vissage/dévissage, ces étapes sont mises en œuvre en temps réel de manière continue.

**6.2.3. Variante à mesure et/ou extraction de grandeurs physiques issue des moyens de contrôle de l'alimentation du moteur**

Selon une variante, l'étape de détermination 21 de la fréquence de rotation maximale de rebond du rotor comprend :

- une étape 213 d'extraction et/ou de calcul de grandeurs physiques issues des moyens de contrôle de l'alimentation,
- une étape 214 de détermination de la fréquence instantanée ω de rotation de rebond du rotor en tenant compte des grandeurs physiques extraites et/ou calculées et
- une étape 214' de détermination de la fréquence de rotation maximale ωmax de rebond du rotor comme étant la valeur maximale de la vitesse instantanée ω enregistrée au cours du rebond.

Au cours de l'opération de vissage/dévissage, ces étapes sont mises en œuvre en temps réel de manière continue.

**i. Moteur triphasé et commande vectorielle**

Les exemples de modes de détermination de la fréquence de rotation du rotor décrits ci-après s'appliquent dans le cas de la mise en œuvre d'un pilotage vectoriel d'un moteur triphasé.

La commande vectorielle permet la transposition des courants statoriques d'un moteur triphasé en 2 composantes orthogonales l'une Iq, proportionnelle au couple électromagnétique du moteur et l'autre Id, représentatif du flux et en général considéré nul.

La commande vectorielle induit :

- à partir des consignes de courant Id et Iq, la définition, au moyen de régulateurs PID 172, deux consignes de tension Ud et Uq. Ces consignes de tensions, ainsi que la valeur de l'angle de rotation du rotor, sont délivrées à un module de calcul de Transformées de Clark/Park inverse 173 dont les sorties sont classiquement reliées à une batterie de transistors de puissance 174 qui, en étant reliée à une alimentation électrique 175, permet d'appliquer les tensions Ua, Ub et Uc sur les phases du moteur. Il en résulte les intensités la, Ib, Ic dans les phases du moteur ;
- la délivrance des courants de phases la, Ib et Ic ainsi que l'angle de rotation mesurés à un module de calcul de Transformées de Clarke/Park 176, qui détermine deux intensités Id et Iq. Ces intensités entrent ensuite dans les régulateurs 172 pour définir les consignes de tension Uq et Ud.

Au cours de l'opération de vissage/dévissage, ces étapes sont mises en œuvre en temps réel de manière continue.

**i.1. Fréquence de rotation à partir des transformées de Clarke/Park**

Selon une variante dans laquelle la fréquence de rotation du moteur est déterminée à partir des transformées de Clarke/Park, l'étape 213 de mesure et/ou d'extraction de grandeurs physiques issues des moyens de contrôle de l'alimentation du moteur comprend la mesure et/ou l'extraction :

- des deux intensités Iq, Id, et
- d'au moins une desdites consignes de tension Ud ou Uq.

L'étape 214 de détermination de la fréquence de rotation maximale de rebond du rotor tient alors compte des intensités Id, Iq et d'au moins une des consignes de tension Ud ou Uq pour déterminer la fréquence de rotation maximale de rebond du rotor comme cela a été expliqué en détail plus haut en relation avec le dispositif.

### *i.2. Fréquence de rotation à partir des transformées de Clark et Park inverse*

Une commande vectorielle induit également notamment :

- le calcul d'une transformée de Park inverse des consignes de tension Uq et Ud donnant comme résultat des tensions U$\alpha$ et U$\beta$,
- le calcul d'une transformée de Clarke des courants de phases Ia Ib et Ic donnant comme résultat des intensités I$\alpha$ et I$\beta$.

Au cours de l'opération de vissage/dévissage, ces étapes sont mises en œuvre en temps réel de manière continue.

Selon une variante dans laquelle la fréquence de rotation du moteur est déterminée à partir des transformées de Clarke/Park inverse, l'étape 213 d'extraction de grandeurs physiques issues des moyens de contrôle de l'alimentation du moteur comprend la mesure et/ou l'extraction :

- des tensions U$\alpha$ et U$\beta$, et
- des intensités I$\alpha$ et I$\beta$.

L'étape de détermination de la fréquence de rotation maximale de rebond du rotor tient alors compte des tensions U$\alpha$ et U$\beta$ et des intensités I$\alpha$ et I$\beta$ pour déterminer la fréquence de rotation maximale de rebond du rotor comme cela a été expliqué en détail plus haut en relation avec le dispositif.

### *i.3. Fréquence de rotation à partir des courants et tensions de phases*

Selon une variante dans laquelle la fréquence de rotation du moteur est déterminée à partir des courants et tensions de phases d'un moteur à commande vectorielle, l'étape 213 de mesure et/ou d'extraction de grandeurs physiques issues des moyens de contrôle de l'alimentation du moteur comprend la mesure et/ou l'extraction :

- des courants Ia, Ib, Ic, et
- des tension de phases Ua, Ub, Uc.

L'étape 214 de détermination de la fréquence de rotation maximale de rebond comprend le calcul de Ea, Eb et Ec en appliquant les formules suivantes où n est a, b ou c :

$$U_n = E_n + RI_n - L\frac{dI_n}{dt}$$

$$E_n = U_n - RI_n + L\frac{dI_n}{dt}$$

L'étape 214 de détermination de la fréquence de rotation maximale de rebond comprend ensuite le calcul de E$\alpha$ et E$\beta$ à partir de Ea, Eb et Ec grâce à la transformée de Clarke, puis le calcul en temps réel à partir de E$\alpha$ et E$\beta$, de la fréquence instantanée de rotation $\omega$ puis la fréquence de rotation maximale $\omega$max enregistrée au cours du rebond.

### ii. Moteur à courant continu

Dans le cas de la mise en œuvre d'un moteur à courant continu, l'étape 213 de mesure et/ou d'extraction de grandeurs physiques issues des moyens de contrôle de l'alimentation du moteur comprend la mesure et/ou l'extraction :

- du courant Im appliqué ou mesuré circulant dans le moteur,
- de la tension Um appliquée ou mesurée aux bornes du moteur.

L'étape 214 de détermination de la fréquence de rotation maximale de rebond du rotor tient alors compte de la tension Um et U et de l'intensité Im pour déterminer la fréquence de rotation maximale de rebond du rotor comme cela a été expliqué en détail plus haut en relation avec le dispositif.

### iii. Moteur à commande à 6 états

Selon une variante mettant en œuvre une commande à 6 états, l'étape 213 de mesure et/ou d'extraction de grandeurs physiques issues des moyens de contrôle de l'alimentation du moteur, et l'étape 214 de détermination de la fréquence de rotation maximale de rebond sont identiques à celles décrites au § *i.3. Fréquence de rotation à partir des courants et tensions de phases.*

### iv Moteur à commande sinusoïdale

Selon une variante mettant en œuvre une commande sinusoïdale, l'étape 213 de mesure et/ou d'extraction de grandeurs physiques issues des moyens de contrôle de l'alimentation du moteur, et l'étape 214 de détermination de la fréquence de rotation maximale de rebond sont identiques à celles décrites au **§ *i.3. Fréquence de rotation à partir des courants et tensions de phases.***

### Revendications

1. Procédé de contrôle du couple appliqué lors d'une opération de vissage/dévissage au moyen d'un dispositif de vissage comprenant :

   - un moteur électrique (11) muni d'un rotor (111) ;
   - un organe de sortie (13) susceptible d'être entrainé en rotation ;
   - un mécanisme d'impact rebondissant (12) lié rigidement audit rotor (111) et audit organe de sortie (13), ledit procédé comprenant une alimentation dudit moteur (11) induisant un entrainement dudit mécanisme d'impact (12) par ledit rotor (111) et un entrainement en rotation de manière périodique dudit organe de sortie (13) par ledit mécanisme d'impact (12),
   l'entrainement dudit mécanisme d'impact (12) générant la survenue d'une pluralité d'impacts successifs à l'issue de chacun desquels ledit rotor (111) tourne dans un rebond dans le sens inverse de l'opération de vissage/-dévissage,
   **caractérisé en ce que** ledit procédé comprend :

   - une étape (21) de détermination d'une fréquence de rotation maximale atteinte par ledit rotor (111) lors du rebond consécutif à la survenu de chacun desdits impacts dans ledit mécanisme d'impact (12), et
   - une étape (22) d'arrêt de ladite opération de vissage/dévissage lorsque ladite fréquence de rotation maximale atteint un seuil prédéterminé correspondant à niveau de couple prédéterminé.

2. Procédé selon la revendication 1 dans lequel ladite étape de détermination (21) d'une fréquence de rotation maximale atteinte par le rotor (111) lors du rebond dudit rotor (111) comprend une étape (210) de détermination d'une fréquence instantanée de rotation atteinte par ledit rotor (111) lors du rebond consécutif à la survenu de chacun desdits impacts dans ledit mécanisme d'impact (12), ladite fréquence de rotation maximale correspondant à la valeur maximale de la fréquence instantanée de rotation à la suite de chaque impact.

3. Procédé selon la revendication 1 ou 2 dans lequel ladite étape de détermination (21) d'une fréquence de rotation maximale atteinte par le rotor (111) lors du rebond dudit rotor (111) comprend une mesure de ladite fréquence de rotation au moyen d'un capteur de vitesse (1610).

4. Procédé selon la revendication 1 ou 2 dans lequel ladite étape de détermination (21) d'une fréquence de rotation maximale atteinte par ledit rotor (111) lors du rebond comprend :

   - une étape (211) de mesure de l'angle de rotation dudit rotor en fonction du temps au moyen d'un capteur d'angle (1611), et
   - une étape (212) de détermination de la dérivée par rapport au temps de l'angle mesuré à ladite étape (211) de mesure de l'angle.

5. Procédé selon l'une quelconque des revendications 1 à 4, dans lequel ladite alimentation dudit moteur met en œuvre des moyens de contrôle de l'alimentation du moteur, ladite étape (21) de détermination de ladite fréquence de rotation maximale atteinte par le rotor (111) lors du rebond dudit rotor (111) comprenant :

- une étape (213) d'extraction et/ou de calcul de grandeurs physiques issues desdits moyens de contrôle de l'alimentation, et
- une étape (214) de détermination de ladite fréquence de rotation maximale atteinte par le rotor (111) lors du rebond dudit rotor en tenant compte desdites grandeurs physiques extraites et/ou calculées.

6. Procédé selon la revendication 5, dans lequel ladite alimentation dudit moteur (11) met en œuvre une commande vectorielle générant deux consignes de tension Ud et Uq à partir d'une consigne de courant Id, d'une consigne de courant Iq, d'une mesure des trois courants de phase Ia, Ib et Ic et d'une mesure de la position angulaire du rotor (111).

7. Procédé selon la revendication 5 dans lequel ladite alimentation dudit moteur (11) met en œuvre une commande BLDC.

8. Procédé selon la revendication 5 dans lequel ladite alimentation dudit moteur (11) met en œuvre une commande sinus.

9. Procédé selon la revendication 6 dans lequel ladite commande vectorielle comprend :

- le calcul de transformées de Clarke/Park à partir desdits courants de phase Ia, Ib et Ic et la position angulaire du rotor (11) donnant comme résultat deux intensités Iq, Id,
- l'extraction d'au moins une desdites consignes de tension Ud ou Uq,

ladite étape de détermination de ladite fréquence de rotation maximale atteinte par le rotor (111) lors du rebond dudit rotor tenant compte desdites intensités Id, Iq et d'au moins une desdites consignes de tension Ud ou Uq.

10. Procédé selon la revendication 6 dans lequel ladite commande vectorielle comprend :

- le calcul d'une transformée de Park inverse desdites consignes de tension Uq et Ud donnant comme résultat des tensions $U\alpha$ et $U\beta$, et
- le calcul d'une transformée de Clarke desdits courants de phases Ia Ib et Ic donnant comme résultat des intensités $I\alpha$ et $I\beta$,

ladite étape (21) de détermination de ladite fréquence de rotation maximale atteinte par le rotor (111) lors du rebond dudit rotor (111) tenant compte desdites tensions $U\alpha$ et $U\beta$ et desdites intensités $I\alpha$ et $I\beta$.

11. Procédé selon la revendication 5, ledit moteur (11) étant à courant continu et lesdites grandeurs physiques extraites et/ou calculées comprenant :

- le courant appliqué ou mesuré circulant dans ledit moteur,
- la tension appliquée ou mesurée aux bornes dudit moteur.

12. Procédé selon l'une quelconque des revendications 5 à 8, ledit moteur (11) étant triphasé et lesdites grandeurs physiques extraites et/ou calculées comprenant :

- au moins deux des courants appliqués ou mesurés dans les phases dudit moteur,
- des tensions appliquées ou mesurées aux niveau des phases dudit moteur.

13. Procédé selon l'une quelconque des revendications 1 à 12 comprenant, à un instant donné, la mise en œuvre de plusieurs étapes (21) de détermination de ladite fréquence de rotation maximale atteinte par le rotor (111) lors du rebond dudit rotor (111), lesdites étapes de détermination étant de natures différentes, et une étape de fusion des résultats obtenus par la mise en œuvre de chacune desdites étape (21) de nature différentes de détermination de ladite fréquence de rotation maximale atteinte par le rotor (111) lors du rebond dudit rotor (111).

14. Dispositif de contrôle du couple appliqué par un dispositif de vissage/dévissage permettant la réalisation d'opérations de vissage/dévissage, ledit dispositif de vissage/dévissage comprenant :

- un moteur électrique (11) muni d'un rotor (111) ;

- un organe de sortie (13) susceptible d'être entrainé en rotation ;
- un mécanisme d'impact rebondissant (12) lié rigidement audit rotor (111) et audit organe de sortie (13), ledit dispositif de contrôle comprenant des moyens de contrôle de l'alimentation dudit moteur (11) aptes à induire un entrainement dudit mécanisme d'impact (12) par ledit rotor (111) et un entrainement en rotation de manière périodique dudit organe de sortie (13) par ledit mécanisme d'impact (12),

l'entrainement dudit mécanisme d'impact (12) générant la survenue d'une pluralité d'impacts successifs à l'issue de chacun desquels ledit rotor (111) tourne dans un rebond dans le sens inverse de l'opération de vissage/-dévissage,

**caractérisé en ce que** ledit dispositif comprend :

- des moyens (161) de détermination d'une fréquence de rotation maximale atteinte par ledit rotor (111) lors du rebond consécutif à la survenu de chacun desdits impacts dans ledit mécanisme d'impact (12), et
- des moyens de commande aptes générer l'arrêt d'une opération de vissage/dévissage en cours lorsque ladite fréquence de rotation maximale atteint un seuil prédéterminé correspondant à niveau de couple prédéterminé.

15. Dispositif selon la revendication 14 dans lequel lesdits moyens (161) de détermination d'une fréquence de rotation maximale atteinte par le rotor (111) lors du rebond dudit rotor (111) comprennent des moyens de détermination d'une fréquence instantanée de rotation atteinte par ledit rotor (111) lors du rebond consécutif à la survenu de chacun desdits impacts dans ledit mécanisme d'impact (12), ladite fréquence de rotation maximale correspondant à la valeur maximale de la fréquence instantanée de rotation à la suite de chaque impact.

16. Dispositif selon la revendication 14 ou 15 dans lequel lesdits moyens (161) de détermination d'une fréquence de rotation maximale atteinte par le rotor (111) lors du rebond dudit rotor comprennent un capteur de vitesse (1610).

17. Dispositif selon la revendication 14 ou 15 dans lequel lesdits moyens (161) de détermination d'une fréquence de rotation maximale atteinte par ledit rotor (111) lors du rebond comprennent :

- des moyens (1611) de mesure de l'angle de rotation dudit rotor en fonction du temps, et
- des moyens (1612) de détermination de la dérivée par rapport au temps de l'angle mesuré par lesdits moyens de mesure de l'angle.

18. Dispositif selon l'une quelconque des revendications 14 à 17, dans lequel lesdits moyens (161) de détermination de ladite fréquence de rotation maximale atteinte par le rotor (111) lors du rebond dudit rotor (111) comprennent des moyens (1615) d'extraction et/ou de calcul de grandeurs physiques issues desdits moyens de contrôle de l'alimentation, lesdits moyens (161) de détermination de ladite fréquence de rotation maximale atteinte par le rotor (111) lors du rebond dudit rotor (111) étant aptes à déterminer ladite fréquence de rotation maximale en tenant compte desdites grandeurs physiques extraites et/ou calculées.

19. Dispositif selon la revendication 18, dans lequel lesdits moyens de contrôle de l'alimentation dudit moteur (11) mettent en œuvre une commande vectorielle apte à générer deux consignes de tension Ud et Uq à partir d'une consigne de courant Id, d'une consigne de courant Iq, d'une mesure des trois courants de phase Ia, Ib et Ic et d'une mesure de la position angulaire du rotor (111).

20. Dispositif selon la revendication 18 dans lequel lesdits moyens de contrôle de l'alimentation dudit moteur (11) mettent en œuvre une commande BLDC.

21. Dispositif selon la revendication 18 dans lequel lesdits moyens de contrôle de l'alimentation dudit moteur (11) mettent en œuvre une commande sinus.

22. Dispositif selon la revendication 19 dans lequel ladite commande vectorielle comprend des moyens de calcul de transformées de Clarke/Park à partir desdits courants de phase Ia, Ib et Ic donnant comme résultat deux intensités Iq, Id, lesdits moyens de calcul et/ou d'extraction étant aptes à extraire au moins une desdites consignes de tension Ud ou Uq, lesdits moyens de détermination de ladite fréquence de rotation maximale atteinte par le rotor (111) lors du rebond dudit rotor (111) étant aptes à déterminer ladite fréquence maximale de rotation en tenant compte desdites intensités Id, Iq et d'au moins une desdites consignes de tension Ud ou Uq.

23. Dispositif selon la revendication 19 dans lequel ladite commande vectorielle comprend des moyens (1730) de calcul d'une transformée de Park inverse desdites consignes de tension Uq et Ud donnant comme résultat des tensions Uα et Uβ, et des (1760) moyens de calcul d'une transformée de Clarke desdits courants de phases la Ib et Ic donnant comme résultat des intensités Iα et Iβ,

lesdits moyens (161) de détermination de ladite fréquence de rotation maximale atteinte par le rotor (111) lors du rebond dudit rotor (111) étant aptes à déterminer ladite fréquence de rotation maximale en tenant compte desdites tensions Uα et Uβ et desdites intensités Iα et Iβ.

24. Dispositif selon la revendication 18, ledit moteur (11) étant à courant continu et lesdites grandeurs physiques extraites et/ou calculées par lesdits moyens de calcul et/ou d'extraction comprenant :

   - le courant appliqué ou mesuré circulant dans ledit moteur,
   - la tension appliquée ou mesurée aux bornes dudit moteur.

25. Dispositif selon l'une quelconque des revendications 18 à 21, ledit moteur étant triphasé et lesdites grandeurs physiques extraites et/ou calculées par lesdits moyens (1615) de calcul et/ou d'extraction comprenant :

   - au moins deux des courants appliqués ou mesurés dans les phases dudit moteur (11),
   - des tensions appliquées ou mesurées aux niveau des phases dudit moteur (11).

26. Dispositif de vissage/dévissage comprenant :

   - un moteur électrique (11) muni d'un rotor (111) ;
   - un organe de sortie (13) susceptible d'être entrainé en rotation ;
   - un mécanisme d'impact rebondissant (12) lié rigidement audit rotor (111) et audit organe de sortie (12),

   ledit dispositif comprenant un dispositif de contrôle selon l'une quelconque des revendications 14 à 25.

27. Produit programme d'ordinateur comprenant des lignes d'instructions de code permettant l'exécution d'un procédé selon l'une quelconque des revendications 1 à 13 lorsqu'il est lu par un ordinateur.


**Patentansprüche**

1. Verfahren zum Steuern des Drehmoments, das bei einem Schraub-/Abschraubvorgang mit einer Schraubvorrichtung aufgebracht wird, die Folgendes umfasst:

   - einen Elektromotor (11), der mit einem Rotor (111) ausgestattet ist;
   - ein Ausgangselement (13), das drehangetrieben werden kann;
   - einen Rückprall-Schlagmechanismus (12), der starr mit dem Rotor (111) und dem Ausgangselement (13) verbunden ist,
   wobei das Verfahren eine Stromversorgung des Motors (11) umfasst, die einen Antrieb des Schlagmechanismus (12) durch den Rotor (111) und einen periodischen Drehantrieb des Ausgangselements (13) durch den Schlagmechanismus (12) induziert, wobei der Antrieb des Schlagmechanismus (12) das Auftreten einer Vielzahl von aufeinanderfolgenden Schlägen erzeugt, nach denen sich jeweils der Rotor (111) in einem Rückprall in die entgegengesetzte Richtung des Schraub-/Abschraubvorgangs dreht,
   **dadurch gekennzeichnet, dass** das Verfahren Folgendes umfasst:

   - einen Schritt (21) des Bestimmens einer maximalen Drehfrequenz, die der Rotor (111) beim Rückprall infolge des Auftretens jedes der Schläge in dem Schlagmechanismus (12) erreicht, und
   - einen Schritt (22) des Stoppens des Schraub-/Abschraubvorgangs, wenn die maximale Drehfrequenz einen vorbestimmten Schwellenwert erreicht, der einem vorbestimmten Drehmomentniveau entspricht.

2. Verfahren nach Anspruch 1, wobei der Schritt (21) des Bestimmens einer maximalen Drehfrequenz, die der Rotor (111) beim Rückprall des Rotors (111) erreicht, einen Schritt (210) des Bestimmens einer augenblicklichen Drehfrequenz umfasst, die der Rotor (111) beim Rückprall infolge des Auftretens jedes der Schläge in dem Schlagmechanismus (12) erreicht, wobei die maximale Drehfrequenz dem Maximalwert der augenblicklichen Drehfrequenz nach jedem Schlag entspricht.

3. Verfahren nach Anspruch 1 oder 2, wobei der Schritt (21) des Bestimmens einer maximalen Drehfrequenz, die der Rotor (111) beim Rückprall des Rotors (111) erreicht, ein Messen der Drehfrequenz mittels eines Drehzahlsensors (1610) umfasst.

4. Verfahren nach Anspruch 1 oder 2, wobei der Schritt (21) des Bestimmens einer maximalen Drehfrequenz, die der Rotor (111) beim Rückprall erreicht, Folgendes umfasst:

   - einen Schritt (211) des Messens des Drehwinkels des Rotors in Abhängigkeit von der Zeit mittels eines Winkelsensors (1611), und
   - einen Schritt (212) des Bestimmens der Zeitableitung des Winkels, der in dem Schritt (211) des Messens des Winkels gemessen wurde.

5. Verfahren nach einem der Ansprüche 1 bis 4, wobei die Stromversorgung des Motors Steuermittel für die Stromversorgung des Motors einsetzt, wobei der Schritt (21) des Bestimmens der maximalen Drehfrequenz, die der Rotor (111) beim Rückprall des Rotors (111) erreicht, Folgendes umfasst:

   - einen Schritt (213) des Extrahierens und/oder Berechnens von physikalischen Größen aus den Steuermitteln für die Stromversorgung, und
   - einen Schritt (214) des Bestimmens der maximalen Drehfrequenz, die der Rotor (111) beim Rückprall des Rotors (111) erreicht, unter Berücksichtigung der extrahierten und/oder berechneten physikalischen Größen.

6. Verfahren nach Anspruch 5, wobei die Stromversorgung des Motors (11) eine Vektorsteuerung einsetzt, die aus einem Stromsollwert Id, einem Stromsollwert Iq, einer Messung der drei Phasenströme Ia, Ib und Ic und einer Messung der Winkelposition des Rotors (111) zwei Spannungssollwerte Ud und Uq erzeugt.

7. Verfahren nach Anspruch 5, wobei die Stromversorgung des Motors (11) eine BLDC-Steuerung einsetzt.

8. Verfahren nach Anspruch 5, wobei die Stromversorgung des Motors (11) eine Sinussteuerung einsetzt.

9. Verfahren nach Anspruch 6, wobei die Vektorsteuerung Folgendes umfasst:

   - Berechnen der Clarke/Park-Transformationen aus den Phasenströmen Ia, Ib und Ic und der Winkelposition des Rotors (11), die als Ergebnis zwei Stromstärken Iq, Id ergeben,
   - Extrahieren von mindestens einem der Spannungssollwerte Ud oder Uq,

   wobei der Schritt des Bestimmens der maximalen Drehfrequenz, die der Rotor (111) beim Rückprall des Rotors (111) erreicht, die Stromstärken Id, Iq und mindestens einen der Spannungssollwerte Ud oder Uq berücksichtigt.

10. Verfahren nach Anspruch 6, wobei die Vektorsteuerung Folgendes umfasst:

    - Berechnen einer umgekehrten Park-Transformation der Spannungssollwerte Uq und Ud, die als Ergebnis die Spannungen $U\alpha$ und $U\beta$ ergeben, und
    - Berechnen einer Clarke-Transformation der Phasenströme Ia, Ib und Ic, die die als Ergebnis die Stromstärken $I\alpha$ und Iß ergeben, wobei der Schritt (21) des Bestimmens der maximalen Drehfrequenz, die der Rotor (111) beim Rückprall des Rotors (111) erreicht, die Spannungen $U\alpha$ und Uß und die Stromstärken $I\alpha$ und Iß berücksichtigt.

11. Verfahren nach Anspruch 5, wobei der Motor (11) ein Gleichstrommotor ist und die extrahierten und/oder berechneten physikalischen Größen Folgendes umfassen:

    - den angelegten oder gemessenen Strom, der im Motor fließt,
    - die an den Klemmen des Motors anliegende oder gemessene Spannung.

12. Verfahren nach einem der Ansprüche 5 bis 8, wobei der Motor (11) ein Drehstrommotor ist und die extrahierten und/oder berechneten physikalischen Größen Folgendes umfassen:

    - mindestens zwei der in den Phasen des Motors angelegten oder gemessenen Ströme,
    - Spannungen, die an den Phasen des Motors anliegen oder gemessen werden.

13. Verfahren nach einem der Ansprüche 1 bis 12, das zu einem gegebenen Zeitpunkt das Durchführen mehrerer Schritte (21) des Bestimmens der maximalen Drehfrequenz, die der Rotor (111) beim Rückprall des Rotors (111) erreicht, umfasst, wobei die Schritte des Bestimmens von unterschiedlicher Art sind, und einen Schritt des Zusammenführens der Ergebnisse, die durch das Durchführen jedes der Schritte (21) von unterschiedlicher Art des Bestimmens der maximalen Drehfrequenz, die der Rotor (111) beim Rückprall des Rotors (111) erreicht, erhalten werden.

14. Vorrichtung zum Steuern des von einer Schraub-/Abschraubvorrichtung aufgebrachten Drehmoments, die das Durchführen von Schraub-/Abschraubvorgängen ermöglicht, wobei die Schraub-/Abschraubvorrichtung Folgendes umfasst:

   - einen Elektromotor (11), der mit einem Rotor (111) ausgestattet ist;
   - ein Ausgangselement (13), das drehangetrieben werden kann;
   - einen Rückprall-Schlagmechanismus (12), der starr mit dem Rotor (111) und dem Ausgangselement (13) verbunden ist,

   wobei die Vorrichtung zum Steuern Steuermittel für die Stromversorgung des Motors (11) umfasst, die dazu geeignet sind, einen Antrieb des Schlagmechanismus (12) durch den Rotor (111) und einen periodischen Drehantrieb des Ausgangselements (13) durch den Schlagmechanismus (12) zu induzieren,
   wobei der Antrieb des Schlagmechanismus (12) das Auftreten einer Vielzahl von aufeinanderfolgenden Schlägen erzeugt, nach denen sich jeweils der Rotor (111) in einem Rückprall in die entgegengesetzte Richtung des Schraub-/Abschraubvorgangs dreht,
   **dadurch gekennzeichnet, dass** die Vorrichtung Folgendes umfasst:

   - Mittel (161) zum Bestimmen einer maximalen Drehfrequenz, die der Rotor (111) beim Rückprall infolge des Auftretens jedes der Schläge in dem Schlagmechanismus (12) erreicht, und
   - Steuerungsmittel, die dazu geeignet sind, das Stoppen eines laufenden Schraub-/Abschraubvorgangs zu erzeugen, wenn die maximale Drehfrequenz einen vorbestimmten Schwellenwert erreicht, der einem vorbestimmten Drehmomentniveau entspricht.

15. Vorrichtung nach Anspruch 14, wobei die Mittel (161) zum Bestimmen einer maximalen Drehfrequenz, die der Rotor (111) beim Rückprall des Rotors (111) erreicht, Mittel zum Bestimmen einer augenblicklichen Drehfrequenz umfassen, die der Rotor (111) beim Rückprall infolge des Auftretens jedes der Schläge in dem Schlagmechanismus (12) erreicht, wobei die maximale Drehfrequenz dem Maximalwert der augenblicklichen Drehfrequenz nach jedem Schlag entspricht.

16. Vorrichtung nach Anspruch 14 oder 15, wobei die Mittel (161) zum Bestimmen einer maximalen Drehfrequenz, die der Rotor (111) beim Rückprall des Rotors erreicht, einen Drehzahlsensor (1610) umfassen.

17. Vorrichtung nach Anspruch 14 oder 15, wobei die Mittel (161) zum Bestimmen einer maximalen Drehfrequenz, die der Rotor (111) beim Rückprall erreicht, Folgendes umfassen:

   - Mittel (1611) zum Messen des Drehwinkels des Rotors in Abhängigkeit von der Zeit, und
   - Mittel (1612) zum Bestimmen der Zeitableitung des Winkels, der von den Mittel (1611) zum Messen des Drehwinkels des Rotors gemessen wurde.

18. Vorrichtung nach einem der Ansprüche 14 bis 17, wobei die Mittel (161) zum Bestimmen der maximalen Drehzahl, die der Rotor (111) beim Rückprall des Rotors (111) erreicht, Mittel (1615) zum Extrahieren und/oder Berechnen von physikalischen Größen, die von den Steuermitteln für die Stromversorgung stammen, umfassen, wobei die Mittel (161) zum Bestimmen der maximalen Drehzahl, die der Rotor (111) beim Rückprall des Rotors (111) erreicht, dazu geeignet sind, unter Berücksichtigung der extrahierten und/oder berechneten physikalischen Größen die maximale Drehfrequenz zu bestimmen.

19. Vorrichtung nach Anspruch 18, wobei die Steuermittel für die Stromversorgung des Motors (11) eine Vektorsteuerung einsetzen, die dazu geeignet ist, aus einem Stromsollwert Id, einem Stromsollwert Iq, einer Messung der drei Phasenströme Ia, Ib und Ic und einer Messung der Winkelposition des Rotors (111) zwei Spannungssollwerte Ud und Uq erzeugt.

20. Vorrichtung nach Anspruch 18, wobei die Steuermittel für die Stromversorgung des Motors (11) eine BLDC-Steuerung einsetzen.

21. Vorrichtung nach Anspruch 18, wobei die Steuermittel für die Stromversorgung des Motors (11) eine Sinussteuerung einsetzen.

22. Vorrichtung nach Anspruch 19, wobei die Vektorsteuerung Mittel zum Berechnen von Clarke/Park-Transformationen aus den Phasenströmen la, Ib und Ic umfasst, die als Ergebnis zwei Stromstärken Iq, Id ergeben, wobei die Mittel zum Berechnen und/oder Extrahieren dazu geeignet sind, mindestens einen der Spannungssollwerte Ud oder Uq zu extrahieren, wobei die Mittel zum Bestimmen der maximalen Drehfrequenz, die der Rotor (111) beim Rückprall des Rotors (111) erreicht, dazu geeignet sind, unter Berücksichtigung der Stromstärken Id, Iq und mindestens eines der Spannungssollwerte Ud oder Uq die maximale Drehfrequenz zu bestimmen.

23. Vorrichtung nach Anspruch 19, wobei die Vektorsteuerung Mittel (1730) zum Berechnen einer umgekehrten Park-Transformation der Spannungssollwerte Uq und Ud, die als Ergebnis die Spannungen $U\alpha$ und $U\beta$ ergeben, und Mittel (1760) zum Berechnung einer Clarke-Transformation der Phasenströme la, Ib und Ic umfasst, die als Ergebnis die Stromstärken $I\alpha$ und $I\beta$ ergeben,
wobei die Mittel (161) zum Bestimmen der maximalen Drehfrequenz, die der Rotor (111) beim Rückprall des Rotors (111) erreicht, dazu geeignet sind, unter Berücksichtigung der Spannungen $U\alpha$ und Uß und der Stromstärken $I\alpha$ und Iß die maximale Drehfrequenz zu bestimmen.

24. Vorrichtung nach Anspruch 18, wobei der Motor (11) ein Gleichstrommotor ist und die physikalischen Größen, die durch die Mittel zum Berechnen- und/oder Extrahieren extrahiert und/oder berechnet werden, Folgendes umfassen:

   - den angelegten oder gemessenen Strom, der im Motor fließt,
   - die an den Klemmen des Motors anliegende oder gemessene Spannung.

25. Vorrichtung nach einem der Ansprüche 18 bis 21, wobei der Motor ein Drehstrommotor ist und die physikalischen Größen, die durch die Mittel zum Berechnen und/oder Extrahieren (1615) extrahiert und/oder berechnet werden, Folgendes umfassen:

   - mindestens zwei der in den Phasen des Motors (11) angelegten oder gemessenen Ströme,
   - Spannungen, die an den Phasen des Motors (11) anliegen oder gemessen werden.

26. Schraub-/Abschraubvorrichtung, die Folgendes umfasst:

   - einen Elektromotor (11), der mit einem Rotor (111) ausgestattet ist;
   - ein Ausgangselement (13), das drehangetrieben werden kann;
   - einen Rückprall-Schlagmechanismus (12), der starr mit dem Rotor (111) und dem Ausgangselement (12) verbunden ist,

   wobei die Vorrichtung eine Vorrichtung zum Steuern nach einem der Ansprüche 14 bis 25 umfasst.

27. Computerprogrammprodukt, das Zeilen von Codeanweisungen enthält, die die Ausführung eines Verfahrens nach einem der Ansprüche 1 bis 13 ermöglichen, wenn es von einem Computer gelesen wird.

**Claims**

1. Method for controlling the torque applied during a screwing/unscrewing operation by means of a screwing device comprising:

   - an electric motor (11) provided with a rotor (111);
   - an output member (13) likely to be rotated;
   - a rebound impact mechanism (12) rigidly linked to said rotor (111) and said output member (13),
   said method comprising powering said motor (11) causing said rotor (111) to drive said impact mechanism (12) and causing said impact mechanism (12) to periodically rotate said output member (13),
   the driving of said impact mechanism (12) causing a plurality of successive impacts to occur after each of which said rotor (111) rotates in a rebound in the opposite direction to the screwing/unscrewing operation,
   **characterised in that** said method comprises:

**EP 4 205 909 B1**

- a step (21) of determining a maximum rotational frequency reached by said rotor (111) during the rebound following the occurrence of each of said impacts in said impact mechanism (12), and
- a step (22) of stopping said screwing/unscrewing operation when said maximum rotational frequency reaches a predetermined threshold corresponding to a predetermined torque level.

2. Method according to Claim 1, wherein said step (21) of determining a maximum rotational frequency reached by the rotor (111) during the rebound of said rotor (111) comprises a step (210) of determining an instantaneous rotational frequency reached by said rotor (111) during the rebound following the occurrence of each of said impacts in said impact mechanism (12), said maximum rotational frequency corresponding to the maximum value of the instantaneous rotational frequency following each impact.

3. Method according to Claim 1 or 2, wherein said step (21) of determining a maximum rotational frequency reached by the rotor (111) during the rebound of said rotor (111) comprises a measurement of said rotational frequency by means of a speed sensor (1610).

4. Method according to Claim 1 or 2, wherein said step (21) of determining a maximum rotational frequency reached by said rotor (111) during the rebound comprises:

   - a step (211) of measuring the angle of rotation of said rotor as a function of time by means of an angle sensor (1611), and
   - a step (212) of determining the derivative with respect to the time of the angle measured in said step (211) of measuring the angle.

5. Method according to any one of Claims 1 to 4, wherein said powering of said motor implements means for controlling the power supply of said motor, said step (21) of determining said maximum rotational frequency reached by the rotor (111) during the rebound of said rotor (111) comprising:

   - a step (213) of extracting and/or calculating physical units from said means for controlling the power supply, and
   - a step (214) of determining said maximum rotational frequency reached by the rotor (111) during the rebound of said rotor taking into account said extracted and/or calculated physical units.

6. Method according to Claim 5, wherein said powering of said motor (11) implements a vectorial control generating two voltage setpoints Ud and Uq from a current setpoint Id, a current setpoint Iq, a measurement of the three phase currents la, Ib and Ic and a measurement of the angular position of the rotor (111).

7. Method according to Claim 5, wherein said powering of said motor (11) implements a BLDC control.

8. Method according to Claim 5, wherein said powering of said motor (11) implements a sine control.

9. Method according to Claim 6, wherein said vectorial control comprises:

   - calculating Clarke/Park transforms from said phase currents la, Ib and Ic and the angular position of the rotor (11) resulting in two intensities Iq, Id,
   - extracting at least one of said voltage setpoints Ud or Uq,

   said step of determining said maximum rotational frequency reached by the rotor (111) during the rebound of said rotor taking into account said intensities Id, Iq and at least one of said voltage setpoints Ud or Uq.

10. Method according to Claim 6, wherein said vectorial control comprises:

   - calculating an inverse Park transform of said voltage setpoints Uq and Ud resulting voltages in $U\alpha$ and $U\beta$, and
   - calculating a Clarke transform of said phase currents la Ib and Ic resulting in intensities $I\alpha$ and $I\beta$,

   said step (21) of determining said maximum rotational frequency reached by the rotor (111) during the rebound of said rotor (111) taking into account said voltages $U\alpha$ and $U\beta$ and said intensities $I\alpha$ and $I\beta$.

11. Method according to Claim 5, said motor (11) being direct current and said extracted and/or calculated physical units comprising:

- the applied or measured current flowing in said motor,
- the voltage applied or measured at the terminals of said motor.

12. Method according to any one of Claims 5 to 8, said motor (11) being three-phase and said extracted and/or calculated physical units comprising:

- at least two of the currents applied or measured in the phases of said motor,
- voltages applied or measured at the phases of said motor.

13. Method according to any one of Claims 1 to 12 comprising, at a given time, carrying out a plurality of steps (21) for determining said maximum rotational frequency reached by the rotor (111) during the rebound of said rotor, said determining steps being of different kinds, and a step for merging the results obtained by carrying out each of said steps (21) of different kinds for determining said maximum rotational frequency reached by the rotor (111) during the rebound of said rotor (111).

14. Device for controlling the torque applied by a screwing/unscrewing device allowing screwing/unscrewing operations to be performed, said screwing/unscrewing device comprising:

- an electric motor (11) fitted with a rotor (111);
- an output member (13) likely to be rotated;
- a rebound impact mechanism (12) rigidly linked to said rotor (111) and said output member (13), said device for controlling comprising means for controlling the power supply of said motor (11) capable of causing said rotor (111) to drive said impact mechanism (12) and causing said impact mechanism (12) to periodically rotate said output member (13),
the driving of said impact mechanism (12) causing a plurality of successive impacts to occur after each of which said rotor (111) rotates in a rebound in the opposite direction to the screwing/unscrewing operation, **characterised in that** said device comprises:

- means (161) for determining a maximum rotational frequency reached by said rotor (111) during the rebound following the occurrence of each of said impacts in said impact mechanism (12), and
- control means capable of generating the stopping of a screwing/unscrewing operation in progress when said maximum rotational frequency reaches a predetermined threshold corresponding to a predetermined torque level.

15. Device according to Claim 14, wherein said means (161) for determining a maximum rotational frequency reached by said rotor (111) during the rebound comprise means for determining an instantaneous rotational frequency reached by said rotor (111) during the rebound following the occurrence of each of said impacts in said impact mechanism (12), said maximum rotational frequency corresponding to the maximum value of the instantaneous rotational frequency following each impact.

16. Device according to Claim 14 or 15, wherein said means (161) for determining a maximum rotational frequency reached by the rotor (111) during the rebound of said rotor comprise a speed sensor (1610).

17. Device according to Claim 14 or 15, wherein said means (161) for determining a maximum rotational frequency reached by said rotor (111) during the rebound comprise:

- means (1611) for measuring the angle of rotation of said rotor as a function of time, and
- means (1612) for determining the derivative with respect to the time of the angle measured in said means for measuring the angle.

18. Device according to any one of Claims 14 to 17, wherein said means (161) for determining said maximum rotational frequency reached by the rotor (111) during the rebound of said rotor (111) comprise means (1615) for extracting and/or calculating physical units from said means for controlling power supply, said means (161) for determining said maximum rotational frequency reached by the rotor (111) during the rebound of said rotor (111) being capable of determining said maximum rotational frequency taking into account said extracted and/or calculated physical units.

19. Device according to Claim 18, wherein said means for controlling the power supply of said motor (11) implement a vectorial control capable of generating two voltage setpoints Ud and Uq from a current setpoint Id, a current setpoint Iq, a measurement of the three phase currents Ia, Ib and Ic and a measurement of the angular position of the rotor (111).

20. Device according to Claim 18, wherein said means for controlling the power supply of said motor (11) implement a BLDC control.

21. Device according to Claim 18, wherein said means for controlling the power supply of said motor (11) implement a sine control.

22. Device according to Claim 19 wherein said vectorial control comprises means for calculating Clarke/Park transforms from said phase currents Ia, Ib and Ic resulting in two intensities Iq, Id, said means for calculating and/or extracting being able to extract at least one of said voltage setpoints Ud or Uq, said means for determining said maximum rotational frequency reached by the rotor (111) during the rebound of said rotor (111) being able to determine said maximum rotational frequency taking into account said intensities Id, Iq and at least one of said voltage setpoints Ud or Uq.

23. Device according to Claim 19 wherein said vectorial control comprises means (1730) for calculating an inverse Park transform of said voltage setpoints Uq and Ud resulting in voltages U$\alpha$ and U$\beta$, and means (1760) for calculating a Clarke transform of said phase currents Ia, Ib and Ic resulting in intensities I$\alpha$ and I$\beta$,
said means (161) for determining said maximum rotational frequency reached by the rotor (111) during the rebound of said rotor (111) being able to determine said maximum rotational frequency taking into account said voltages U$\alpha$ and U$\beta$ and said intensities I$\alpha$ and I$\beta$.

24. Device according to Claim 18, said motor (11) being direct current and said physical units extracted and/or calculated by said means for calculating and/or extracting comprising:

   - the applied or measured current flowing in said motor,
   - the voltage applied or measured at the terminals of said motor.

25. Device according to any one of Claims 18 to 21, said motor being three-phase and said physical quantities extracted and/or calculated by said calculation and/or extraction means (1615) comprising:

   - at least two of the currents applied or measured in the phases of said motor (11),
   - voltages applied or measured at the phases of said motor (11).

26. Screwing/unscrewing device comprising:

   - an electric motor (11) fitted with a rotor (111);
   - an output member (13) likely to be rotated;
   - a rebound impact mechanism (12) rigidly linked to said rotor (111) and said output member (12),

   said device comprising a device for controlling according to any one of Claims 14 to 25.

27. Computer program product comprising lines of code instructions enabling the execution of a method according to any one of claims 1 to 13 when read by a computer.

Fig. 1

Fig. 2

A-A

Fig. 3

Fig. 4

EP 4 205 909 B1

Fig. 5

EP 4 205 909 B1

Fig. 6

Fig. 7

Fig. 8

Fig. 9

Fig. 10

20

21

| Alimentation moteur<br>/<br>Entrainement du<br>mécanisme d'impact<br>/<br>Entrainement de l'organe<br>de sortie | Détermination de ωmax |
|---|---|

ωmax
> ou = à
ωfin

NON

OUI

22

| Arrêt opération de<br>vissage/dévissage en<br>cours |
|---|

Fig. 11

21

| Mesure de  210<br>ωinstantané | Mesure de θ   211 | Extraction et/ou mesure<br>de grandeurs physiques<br>issues des moyens de<br>commande de<br>l'alimentation moteur |
|---|---|---|
| Détermination 210'<br>de ωmax | Calcul de la dérivée par 212<br>rapport au temps de de θ | 213 |
| | Détermination 212'<br>de ωmax | Détermination de 214<br>ωinstantané en fonction<br>des grandeurs physiques<br>mesurées et/ou extraites |
| | | Détermination 214'<br>de ωmax |

Fig. 12

## RÉFÉRENCES CITÉES DANS LA DESCRIPTION

**Documents brevets cités dans la description**

*   EP 3653339 B1